# EUROPEAN PATENT APPLICATION

(11) **EP 1 801 577 A1**
(43) Date of publication of application: **27.06.2007**
(21) Application number: 05783188.5
(22) Date of filing: 13.09.2005
(51) Int. Cl.: G01N 29/04

(54) **ULTRASONIC INSPECTION METHOD AND DEFECT DETECTION METHOD FOR ROLLING BEARING**

(30) Priority: 16.09.2004 JP 2004269552; 31.01.2005 JP 2005023487; 28.04.2005 JP 2005131649
(71) Applicant: NSK LTD., Shinagawa-ku, Tokyo 141-8560 (JP)
(72) Inventor: KIUCHI, Akihiro, c/o NSK Ltd., Fujisawa-shi, Kanagawa 251-8501 (JP)
(74) Representative: Finnie, Peter John
(86) International application number: PCT/JP2005/016846
(87) International publication number: WO 2006/030787

(57) **Abstract**

An ultrasonic flaw detection method for detecting a flaw which inspects a raceway surface 4a of an outer ring 4 as a surface to be inspected. After the surface to be inspected has finished undergoing finish grinding, a flaw is ultrasonically detected while liquid hydrocarbon 2 including kerosene is taken as an ultrasonic wave transmission medium.

## Description

### Technical Field

The present invention relates to a ultrasonic flaw detection method for inspecting flaws in a raceway surface or a rolling contact surface of a rolling bearing, and more particularly to a ultrasonic flaw detection method for a rolling bearing effective for detecting a short-life product and providing highly-reliable rolling bearings guaranteed to have stable life.

### Background Technique

Since a rolling bearing rotates while undergoing the load exerted on a shaft by way of rolling elements, the rolling bearing is subjected to high contact pressure and repeated rolling fatigue between rolling elements and inner and outer rings. Consequently, when a flaw is present in the raceway surface or a position located immediately below the surface, the flaw poses great influence on rolling-fatigue life. For this reason, in relation to a material used for a rolling bearing, no flaws are expected to be present in the surface or inside of a raceway surface of an end product of a rolling bearing.

Moreover, in relation to a rollingbearing, fine cracks occasionally open in a raceway during turning operation in the course of manufacture of the rolling bearing or under the excessive conditions employed during grinding operation. When the fine cracks still remain at the time of completion of the rolling bearing, the fine cracks may be responsible for early flaking which originates from the cracks as a result of concentration of the stress induced by rolling fatigue.

Therefore, a steel maker which manufactures bearing steel to be used as materials for rolling parts inspects steel products, such as round-bar steel, by means of ultrasonic flaw detection; and ships only non-defective products in which no flaws have been found. However, steel products of which crystal grains are coarse since they had just been rolled and which have a large surface roughness are subjected to the inspection performed by the steel maker. Moreover, from the viewpoint of productivity, ultrasonic flaw detection is performed at high speed. For these reasons, ultrasonic flaw detection is not performed at high precision, and detecting inclusions are difficult, unless the inclusions are of a size on the order of ten millimeter or greater. Consequently, the current state of inspection performed by the steel maker is to make a determination as to whether a product is non-defective or defective bymeans of determining whether or not machining flaws, such as cracks, wrinkles, or the like, caused by rolling or drawing or flaws, such as inclusions of a size on the order of ten millimeters or more, are present in the surface of a product under inspection (the surface of a product when the product under inspection is round-bar steel or an interior surface when a product under inspection is a pipe material).

For instance, proposed in Japanese Patent Unexamined Publication JP-A-2003-222617 is detection of a flaw at a single location of a steel product, such as a steel pipe, by use of an angle beam and a normal beam. When intensities of all resultantly-reflected echoes have exceeded a predetermined threshold value, a flaw is determined to be present. The patent document also includes a description of a determination being made as to the circumferential and/or axial continuity of a steel pipe and, when an area determined to include a flaw is continually in excess of a predetermined threshold value, the steel pipe is determined to be harmful to conduct an action at the following production step of the ultrasonic flaw detection.

Meanwhile, in relation to a steel rolling bearing, even an inclusion which is smaller than tens of millimeters is known to affect a rolling-fatigue life. Therefore, the present inventors propose, in Japanese Patent Unexamined Publications JP-A-2000-130447 and JP-A-2002-317821, and Japanese Patent Application JP-2002-293750, specifying an inclusion which will affect a rolling-fatigue life; and eliminating the inclusion from a rolling part by means of ultrasonic flaw detection against a completed rolling part through inspection.

Further, data pertaining to flaws which are present in a product under inspection and have been detected through ultrasonic flaw detection are usually taken as evidence of inspection having been conducted or recorded for finding causes of a defective product.

For instance, pg. 14 of "Special Steel," No. 6, vol. 46, 1997 and pg. 27 of "Special Steel," No. 2, vol. 51, 2002 include descriptions, as a method for recording data pertaining to flaws detected through ultrasonic flaw detection, of converting the intensity of a resultantly-reflected echo into an analogue signal and recording the signal in the form of an analogue chart by means of taking the signal for the vertical axis and time for the horizontal axis.

Moreover, JP-A-2003-222617 set forth also includes a description about a method for measuring the intensity of an echo reflected at every pitch of flaw detection in the axial and circumferential directions of a product under inspection; converting the measured intensity into a digital signal; and digitally recording the signal while an axial pitch of flaw detection is taken as the vertical axis and a circumferential pitch of flaw detection is taken as the horizontal axis.

Further, surface flaws are inspected in the process of manufacture of a bearing, by means of fluorescent magnetic particle flaw detection, or the like, with a view toward inspecting deficiencies due to heat treatment. Subsequently, there is an example of magnetic particle flaw detection or leakage flux inspection having been performed as an inspection of surface flaws, such as surface flaws caused during a grinding process, grinding cracks, or the like (see pp. 5 to 7, and pg. 25 of "Special Steel," Special Steel Association of Japan, No. 6, Vol. 46 (1997)).

A water-based ultrasonic transmission medium which is to be interposed between a workpiece and a transducer is generally used for ultrasonic flaw detection. When compared with another ultrasonic transmission medium such as oil or the like, a water-based ultrasonic transmission medium exhibits superior propagation of sonic waves. Since the water-based ultrasonic transmission medium is easy to acquire and easy to maintain, the water-based ultrasonic transmission medium is selected. A great majority of mediums used by the steel makers for ultrasonic flaw detection are water-based.

In immersion testing using a water-based medium, two methods; namely, a method for inclining a probe with respect to the center line of a workpiece and a method for imparting an angle of incidence to a probe by means of translating the probe with respect to the center line of the workpiece (e.g., in the axial direction of a bearing), to thus relatively offset the workpiece, are available when flaws are detected by means of imparting an angle of incidence with respect to a workpiece as in an angle beam flaw detection method or a surface wave flaw detection method. Since the offset method is easy to set, the method can be implemented, for instance, by means of translating only a workpiece, and since no superior difference exists between the methods in terms of detection capability, the offset method is generally adopted for inspecting industrial products.

An ultrasonic flaw detection method described in JP-A-11-337530 is available as a method for inspecting a large non-metallic inclusion or a flaw located immediately below a raceway surface by means of subjecting the raceway surface of a rolling bearing to ultrasonic flaw detection.
Patent Document 1: JP-A-11-337530
Patent Document 2: JP-A-2003-222617
Patent Document 3: JP-A-2000-130447
Patent Document 4: JP-A-2002-317821
Patent Document 5: JP-2002-293750
Non-Patent Document 1: pg. 14 of "Special Steel," No. 6, Vol. 46, 1997
Non-Patent Document 2: pg. 27 of "Special Steel," No. 2, Vol. 51, 2002

### Disclosure of the Invention

### Problems to be Solved by the Invention

The life of a rolling bearing is greatly affected by flaws included in a raceway surface; particularly, a range over which rolling contact stress extends; for instance, a large non-metallic inclusion or a surface flaw.

Accordingly, in order to lessen the number of short-life rolling bearings, surface flaws are desirably inspected in processes subsequent to a grinding process in which a workpiece is formed into the final shape.

However, during inspection operation performed at a material stage in a steel maker, evaluation and screening are merely performed along with removal of a large flaw, by reference to, e.g., a frequency of presence of a flaw per material lot, and there is a limit on the guarantee of an individual bearing.

In the inspection operation performed in the grinding process, the structural state of the test object is an annealed state. In terms of ease of propagation of ultrasonic waves, the structure of the test object is known to be inferior to the structural state of the object after heat treatment. Moreover, since a turning pattern still remains on the raceway surface, the raceway surface is coarser than the surface of a raceway after grinding. The turning pattern is responsible for diffuse reflection of ultrasonic waves. Even in this regard, problems lie in flawdetectioncapability. Further, the raceway surface is later eliminated through grinding by an amount corresponding to removal stock. Evenwhen having been detected, flaws are eliminated by means of grinding. Hence, the inspection becomes meaningless. Conversely, there still remains a problem, such as a fear of an inclusion, which will present a new problem, being exposed, after having undergone grinding, from the inside to a depth where the inclusion poses a problem.

JP-A-11-337530 describes a large inclusion inspection method as a method for inspecting a rolling bearing, wherein a defect in a raceway surface is detected after the surface has been ground. However, since this method uses water as an ultrasonic wave transmission medium, air bubbles arise when the workpiece is immersed into or removed from the water serving as a medium, and a predetermined period of time must be ensured for removal of air bubbles. Moreover, when air bubbles are detected as flaws, erroneous ascertainment of the flaws results in an increase chance of occurrence of erroneous detection, thereby posing a problem of a hike in cost, because re-inspection is required. Further, reducing the amounts of air bubbles requires a degassing setup, or the like, for reducing the amount of oxygen in water, which in turn adds to equipment cost.

According to the above method, when a flaw in an end portion of a bearing (an axial end portion of a raceway surface) is detected, an echo reflected from the end portion exhibits high reflection intensity (hinders detection), which poses difficulty in detecting flaws in the entire raceway surface. This problem is particularly noticeable in the case of a rolling bearing, such as a compact ball bearing type, for which there occasionally arises a case where rolling elements pass by a marginal area of the end portion of the raceway surface, to thus impose contact stress on the end portion.

The study and evaluation performed by the present inventors show that, when the offset method is applied for the case of a workpiece having an axial concave curvature as in a raceway surface of a ball bearing and also having two end portions (groove piece portions), the end portions serve as a noise source, thereby raising a problem of limitations being imposed on a flaw detectable range. In the case of a ball bearing, the bearing can receive thrust load in addition to radial load. Therefore, an area where balls (rolling elements) travel extends over a wide range of the raceway surface. When an area to be inspected is limited, there is a fear of early flaking being induced by a flaw located at a location outside the inspected area.

Further, in order to detect an inclusion-which is smaller than tens of millimeters-through use of the method described in connection with JP-A-2003-222617 set forth, a pitch of flaw detection for evaluating continuity of a subject to be inspectedmust be fragmented, to thus enhance the sensitivity of flaw detection, and a threshold value for the intensity of a reflected echo determined to be a flaw must be decreased. However, fragmenting the pitch of flaw detection and enhancing the sensitivity of flaw detection are also presumed to increase an electrical noise signal and pose difficulty in distinguishing a flaw from noise.

Since the electrical noise signal appears cyclically, the essential requirement is to analyze a signal which appears cyclically after measurement of the intensities of all reflected echoes and to eliminate the signal. However, there is a problem of an increase in efforts and cost required for measurement.

In order to accurately detect an inclusion which is smaller than tens of millimeters, there is a necessity for making surface roughness of a test object small and preventing attenuation of ultrasonic waves. However, when the surface of the test object is subjected to machining, such as turning or grinding, in order to make surface roughness small, there may arise a case where processing flaws arise in the test obj ect in the circumferential direction thereof. In contrast with the electrical noise signal, a noise signal attributable to the processing flaw does not appear cyclically, and hence the noise signal is difficult to be distinguished from a flaw.

Moreover, since the intensity of an echo reflected from the inclusion which is smaller than tens of millimeters is weak, the reflected echo is difficult to detect with high accuracy. Therefore, as described in JP-A-2003-222617, when a determination is made as to an inclusion from only the axial or circumferential continuity of the test object, there may arise a case where a single, long inclusion is determined to be two inclusions or more or where no inclusion is present.

JP-A-2000-130447, JP-A-2002-317821, and JP-A-2002-293750 each provides a description of detection of an inclusion through ultrasonic flaw detection. However, none of these documents refer to a method for determining the inclusion.

Moreover, as described in pg. 14 of "Special Steel," No. 6, vol. 46, 1997 and pg. 27 of "Special Steel," No. 2, vol. 51, 2002, data pertaining to all detected inclusions are stored, and hence there is a problem of management of data involving consumption of efforts and cost.

The present invention has been conceived in light of these points, and a challenge to be met by the present invention is to provide an ultrasonic flaw detection method effective for providing a rolling bearing product which is free from a fear of occurrence of a short-life product. Another challenge to be met by the present invention is to provide a flaw determination method which enables highly-accurate detection of a flaw whose reflected echo exhibits low intensity as in the case of, e.g., an inclusion which is smaller than tens of millimeters.

### Means for Solving the Problems

When a raceway surface of a rolling bearing, a large inclusion located in the vicinity thereof, and surface flaws are conceived as subj ects to be inspected, the present inventors have contrived the present invention by finding an optimum inspection process among various processes, as well as an optimum medium. Moreover, an inspection method which is not affected by an echo from an end portion is found and solved, whereby the present invention has been conceived.

A large inclusion in an individual product can be inspected, and hence there can be provided a product which does not involve any concern about occurrence of a short-lifeproduct.

In order to solve the above-mentioned problems, the present inventors have conducted considerable studies. Through the studies, the present inventors have found that "an echo reflected from an inclusion in a subject to be measured is continually present in a metal-rolling direction (e.g., an axial direction) of the subject to be inspected and various noise signals are continually present in a vertical direction (e.g., a circumferential direction) with respect to the metal-rolling direction of the subject to be inspected" and that "when two or more inclusions are present adjacently within a range of predetermined interval in themetal-rolling direction, the inclusions are present as a single, continual inclusion."

In order to achieve the object, according to a first aspect of the present invention, there is provided an ultrasonic flaw detection method for a rolling bearing, which inspects at least one of a raceway surface of a bearing ring and a rolling-contact surface of a rolling element as a surface to be inspected, the method comprising:
finish grinding the surface to be inspected; and
performing ultrasonic flaw detection by using liquid hydrocarbon including kerosene as an ultrasonic wave transmission medium.

According to a second aspect based on the first aspect of the present invention, (a beam diameter "r" / a diameter R of a transducer) is preferably set to a value of 0.8 or less, and
flaw detection is performed while a probe is moved in an axial direction of the bearing along the surface to be inspected.

According to a third aspect of the present invention, there is provided an ultrasonic flaw detection method for a rolling bearing, which inspects at least one of a raceway surface of a bearing ring and a rolling-contact surface of a rolling element, as a surface to be inspected, the method comprising:
setting (abeam diameter "r" / a diameter Rof a transducer) to a value of 0.8 or less; and
performing flaw detection while a probe is moved in an axial direction of the bearing along the surface to be inspected.

According to a fourth aspect based on any of the first through third aspects of the present invention, flaw detection is preferably performed while the probe is being rotated in an axial direction of the bearing along a curve of the surface to be inspected.

According to a fifth aspect of the present invention, there is provided an ultrasonic flaw detection method for a rolling bearing, which inspects at least one of a raceway surface of a bearing ring and a rolling-contact surface of a rolling element, as a surface to be inspected, the method comprising:
performing flaw detection while rotating a probe in an axial direction of the bearing along a curve of the surface to be inspected;
setting a center axis of the rotation of the probe so as to fulfill below conditions (a) to (c); and
inclining the probe along with the center axis of rotation of the probe with respect to a normal to the surface to be inspected:
   (a) the center axis of the rotation of the probe passing through a point of center of the surface, in a widthwise direction thereof, to be inspected;
   (b) the center axis of the rotation of the probe being perpendicular to the normal to the surface to be inspected;
   (c) the center axis of the rotation of the probe lying in a plane perpendicular to an axis of the bearing ring or an axis of the rolling element which is to be inspected.

According to a sixth aspect based on the fifth aspect of the present invention, the ultrasonic flaw detection is preferably performed while kerosene or another liquid hydrocarbon is taken as an ultrasonic wave transmission medium after the surface to be inspected has finished undergone finish grinding.

According to a seventh aspect based on the fifth or sixth aspect of the present invention, (a beam diameter "r" / a diameter "R" of a transducer) is preferably set to a value of 0.8 or less.

According to an eighth aspect of the present invention, there is provided an ultrasonic flaw detection method for a bearing ring of a rolling bearing comprising:
immersing an entirety of the bearing ring into an ultrasonic wave transmission medium;
squirting the medium to the bearing ring; and
performing flaw detection such that an axis of the bearing ring becomes perpendicular to a liquid level of the medium.

According to a ninth aspect of the present invention, there is provided an ultrasonic flaw detection method for a bearing ring of a rolling bearing comprising:
immersing an entirety of the bearing ring into an ultrasonic wave transmission medium;
setting await time of 1.5 seconds ormore before initiation of flaw detection; and
performing flaw detection such that an axis of the bearing ring becomes perpendicular to a liquid level of the medium.

According to a tenth aspect based on the ninth aspect of the present invention, it is preferable that the bearing ring is previously immersed into the medium at a location other than a flaw detection position, and
the bearing ring is moved to the flaw detection position in the medium after removal of bubbles adhering to the bearing ring, and then flaw detection is performed.

According to an eleventh aspect of the present invention, there is provided a flaw detection method for applying ultrasonic waves to a subject of inspection and measuring an echo reflected from a flaw in the subject of inspection, to thus detect the flaw, wherein
an area where the reflected echo of predetermined intensity or more is successively measured over a predetermined distance in a metal-rolling direction of the subject of inspection is taken as the flaw; and,
when two or more flaws are present adjacently within a range of predetermined interval or less in the metal-rolling direction of the subject of inspection, the two or more flaws are detected as a single flaw.

Performing ultrasonic flaw detection after finishing operation, which is operation of the final process of manufacturing processes, enables an inspection with the best surface roughness. Moreover, since oil is used as a lubricant for grinding in a finishing process, kerosene or another liquid hydrocarbon-based detergent is usually used for cleansing performed after grinding operation. Therefore, even in an inspection process, where ultrasonic flaw detection is performed, subsequent to the grinding process for finishing, kerosene or another liquid hydrocarbon-based medium, which is of the same type as the cleaning fluid, is used, and hence superior affinity is achieved between the medium and the workpiece. Therefore, when a workpiece is inserted into or taken out of an ultrasonic wave transmission medium, air bubbles or the like essentially do not develop. Hence, a facility such as a degasifier becomes obviated. Moreover, the airbubbles serving as the source of noise are significantly diminished without performance of special operation, and hence a failure such as erroneous detection is prevented.

Despite apprehension that the kerosene or another liquid hydrocarbon-based medium lowers sensitivity as compared with a water-based medium, the present inventors have found that inspection can be performed at essentially the same sensitivity as that achieved in the case of the water-based medium, depending on conditions for incidence acquired when a workpiece and a probe are subjected to angle beam flaw detection.

The "conditions for incidence acquired at the time of angle beam flaw detection" include an incident angle of 15 to 30°, preferably 19 to 27°. It is ascertained that, even when liquid hydrocarbon is used as a medium, required sensitivity can be ensured within the above range.

A distance between a leading end of the probe and an area of the workpiece to be searched is preferably 10 to 40 mm, more preferably 20 to 30 mm.

Moreover, ultrasonic waves having entered a workpiece are diffracted while the ultrasonic probe remains inclined at a predetermined angle with respect to the raceway surface, and the ultrasonic waves propagate through a predetermined range of inspection (for example, several millimeters beneath a surface in the case of the present invention). In this case, the present inventors have found that, depending on a ratio of the diameter of the probe to the diameter of an ultrasonic beam, echoes reflected from end portions pose a hindrance when the range of flaw detection-where flaw detection is performed-is close to the end portions (axial end portions of the raceway surface), thereby generating an area where flaw detection cannot be performed. In contrast, as a result of considerable studies, the present inventors have found that inspection can be performed at the same sensitivity as that achieved in other areas up to the end portions of the raceway surface without being affected by the end portions, by means of setting a relationship between the diameter R of a transducer and a diameter "r" of the beam (r/R) to a value of 0.8 or less. As mentioned previously, (r/R)≤0.8 is defined. No particular problems arise when (r/R) assumes a value of 0.8 or less. However, because of specifications of a product, the lower limit value of (r/R) is subjected to limitation.

The invention defined in claim 5 is a method for ultrasonically inspecting a flaw in a raceway surface of a rolling bearing. Ultrasonic waves are caused to enter while the probe is inclined in a circumferential direct ion with respect to a normal to the raceway surface of a surface to be inspected (a surface to be subjected to flaw detection) of a workpiece, by use of an immersion ultrasonic wave flaw detection method. The present invention has been conceived as a result of the finding that a noticeable effect is yielded when the raceway diameter of the workpiece serving as a subject is set to a value of 100 millimeters or less.

Of the rolling bearings, bearings of compact ball bearing type are used as, e.g., hub bearings for an automobile. Thus, the number of manufactured rolling bearings is also high, and the bearings are elements whose reliability is vital. Therefore, a desirable method is to subject the entire raceway surface over which rolling elements travel to total inspection within a short period of time. According to the present invention, the entire raceway surface can be inspected at high accuracy (sensitivity). So long as flaw detection is automated, an accurate inspection can be performed at high speed.

According to the eleventh aspect of the present invention, continuity of echoes reflected from the subject of inspection in a metal-rolling direction thereof is taken as a criterion for determining a flaw. As a result, various types of noise extending in a vertical direction with respect to the metal-rolling direction are difficult to detect, and flaws extending in the metal-rolling direction can be detected with high accuracy.

When two or more flaws are adjacent within a range of predetermined interval in a metal-rolling direction, the two or more flaws are detected as a continual single flaw. As a result, even flaws whose reflected echoes exhibit low intensity can be detected with high accuracy.

In the present invention, the "metal-rolling direction" refers to a direction in which a subject to be inspected is to be rolled. For instance, when the subject to be inspected is a round rod or a bearing ring, an axial direction of the subject corresponds to the metal-rolling direction in many cases.

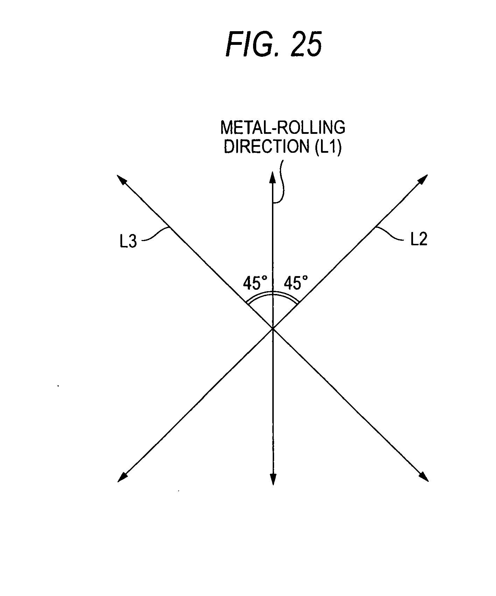

Moreover, in the present invention, the expression "continual in the metal-rolling direction" is not limited to a case where continuity is achieved in a linear direction L1 parallel to the metal-rolling direction as shown in Fig. 25, but also encompasses a case where continuity is achieved in linear directions L2, L3 inclined at a predetermined angle (e.g., 45°) with respect to the linear direction L1.

Further, in the present invention, the "predetermined intensity" of a reflected echo used as a criterion for detecting a flaw, the "predetermined distance" where reflected echoes of predetermined intensity or more are continual, and the "predetermined interval" between two or more flaws used as a criterion for detecting two or more flaws as a single flaw are changed, as required, according to a flaw to be detected.

Under the flaw detection method of the present invention, in relation to the subject of inspection from which the flaws have been detected, all sets of measured data pertaining to reflected echoes are preferably recorded. In relation to the subject of inspection from which no flaws have been detected, data pertaining to the maximum measured value of the reflected echo are preferably recorded.

Bymeans of the recorded data, data pertaining to flaws included in the subject of inspection can be recorded efficiently.

### Advantages of the Invention

The present invention enables provision of an ultrasonic flaw detection method effective for providing rolling bearing products which do not involve a concern about occurrence of a short-life product.

Under the flaw detection method according to the eleventh aspect of the present invention, an area where reflected echoes of predetermined intensity or more are continually measured over a predetermined distance in a metal-rolling direction of a subject to be inspected is detected as a flaw. When two or more flaws are present adjacently within a range of predetermined interval or less, the two or more inclusions are detected as a single inclusion. Thus, even in the case of a flaw whose reflected echo exhibits low intensity as in the case of, e. g., an inclusion of less than tens of millimeters, the flaw can be detected with superior accuracy.

### Brief Description of the Drawings

Fig. 1 is a general block diagram of an ultrasonic flaw detector according to an embodiment of the present invention;
Fig. 2 is a fragmentary enlarged view of Fig. 1;
Fig. 3 is a fragmentary enlarged view of Fig. 1;
Fig. 4 is a view showing an example bearing production process;
Fig. 5 is a view showing an artificial flaw;
Fig. 6 is a view showing an inspection test piece;
Fig. 7 is a view showing the inspection test piece;
Fig. 8 is a view showing the inspection test piece;
Fig. 9 is a view which describes a method for specifying a beam diameter;
Fig. 10 is a view which describes the concept of the method for specifying a beam diameter;
Fig. 11 is a view showing a relationship between an (r/R) ratio and an S/N ratio;
Fig. 12 is a view showing the intensity of an echo achieved at an end portion;
Fig. 13 is a view showing the intensity of an echo achieved at a center;
Fig. 14 is a view for describing an offset method and an incident angle method;
Fig. 15 is a view for describing the incident angle method;
Fig. 16 is a view for describing a difference between the incident angle method and the offset method;
Fig. 17 is a view showing a relationship between the shape of an acoustic wave acquired by the incident angle method and the shape of an acoustic wave acquired by the offset method;
Fig. 18 is a view showing an example self-aligning roller bearing;
Fig. 19 is a view showing an example tapered roller hub bearing;
Fig. 20 is a conceptual rendering for describing the configuration of an ultrasonic wave flaw detector of a second embodiment;
Fig. 21 is a conceptual rendering for describing processes of the second embodiment;
Fig. 22 is a conceptual rendering showing artificial flaws;
Fig. 23 is a view showing a relationship between base noise and a flaw echo (an echo of flaw);
Fig. 24 is a view showing a relationship between a flaw detection start time and the number of output NG signals;
Fig. 25 is a descriptive view showing example continuity in the direction of rolling used in the flaw detection method of the present invention;
Fig. 26 is a schematic block diagram showing an example ultrasonic flaw detector employed in the flaw detection method of the present invention;
Fig. 27 is a view showing an example result of ultrasonic flaw detection according to a seventh embodiment;
Fig. 28 is a view showing another example result of ultrasonic flaw detection of the seventh embodiment;
Fig. 29 is an optical microphotograph showing flaws F and G detected in Fig. 28;
Fig. 30 is an optical microphotograph showing flaws H and I detected in Fig. 28;
Fig. 31 is a view showing an example result of ultrasonic flaw detection acquired in an eighth embodiment;
Fig. 32 is a view showing another example result of ultrasonic flaw detection acquired in the eighth embodiment; and
Fig. 33 is a view showing yet another example result of ultrasonic flaw detection acquired in the eighth embodiment.

### Descriptions of the Reference Numerals

- 1: BATH
- 2: LIQUID HYDROCARBON
- 3: JIG (TURN TABLE)
- 3a: FITTING SECTION
- 4: OUTER RING (WORKPIECE)
- 4a, 4b: RACEWAY SURFACES
- 5: MOTOR
- 6: CONTROL AMPLIFIER FOR DRIVING MOTOR
- 7: CONTROLLER
- 8: PROBE
- 9: FIXTURE
- 10: C-SHAPED MEMBER
- 11: POSITIONING CONTROL AMPLIFIER
- 12: SUPPORT SECTION (ELEVATION SECTION)
- 13: TRANSVERSE MECHANISM
- 14: ULTRASONIC FLAW DETECTOR
- P: ROTARY SHAFT
- 108: MEDIUM
- 110: BATH
- 111: TEST OBJECT
- 112: PROBE
- 113: TURN TABLE
- 114: SERVO MOTOR
- 115: CONTROL AMPLIFIER FOR DRIVING SERVO MOTOR
- 116: XYZ STAGE
- 117: SUPPORT SECTION
- 118: FIXTURE
- 119: ROTARY ENCODER
- 120: ULTRASONIC FLAW DETECTOR
- 130: CONTROLLER
- 140: POSITIONING CONTROL AMPLIFIER

### Best Modes for Implementing the Invention

Embodiments of the present invention will now be described by reference to the drawings.

### First Embodiment

The present invention will first be described by reference to the configuration of an ultrasonic flaw detector of the present embodiment.

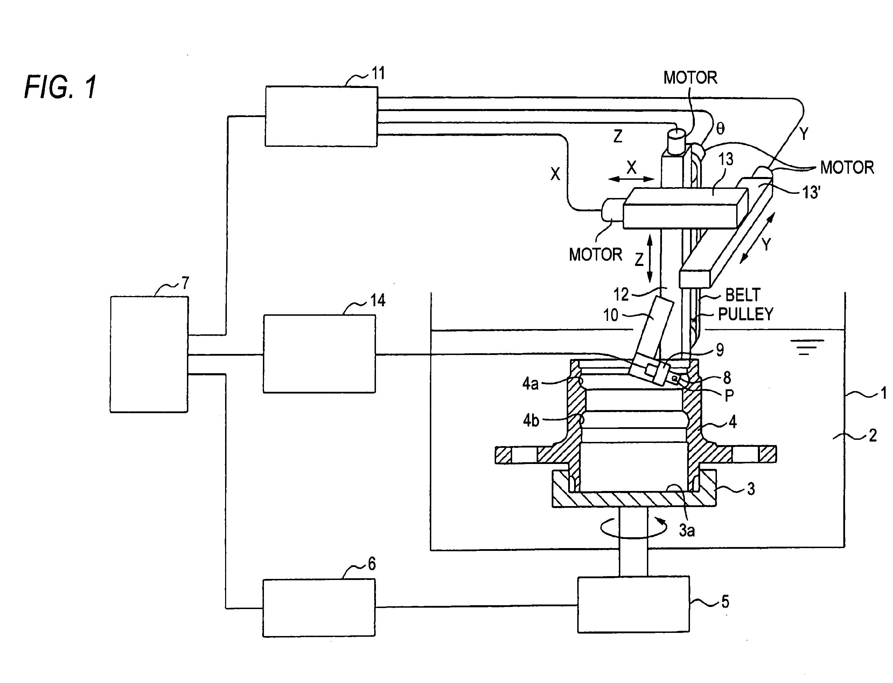

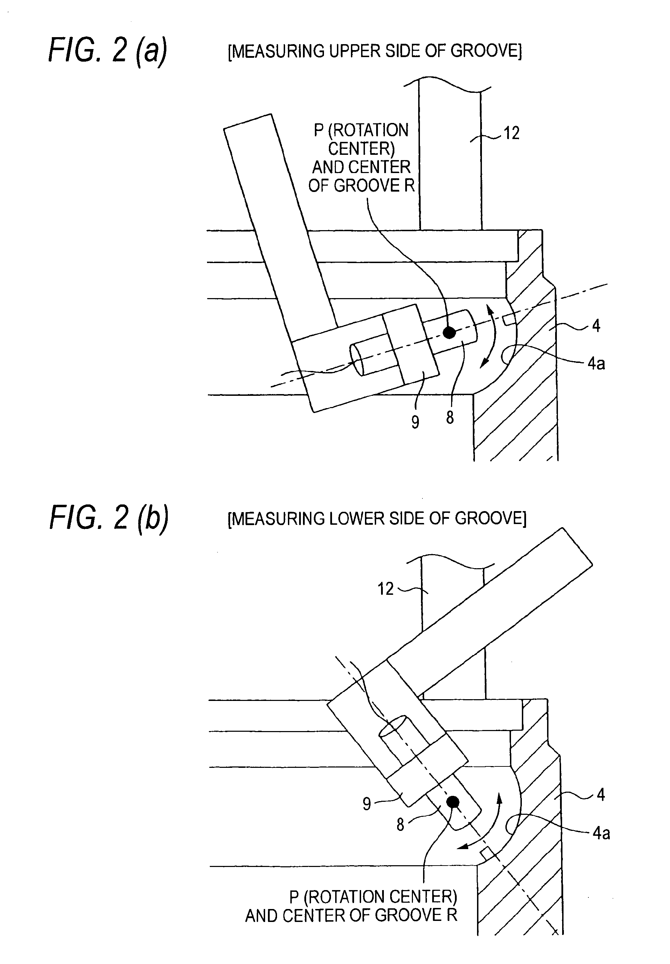

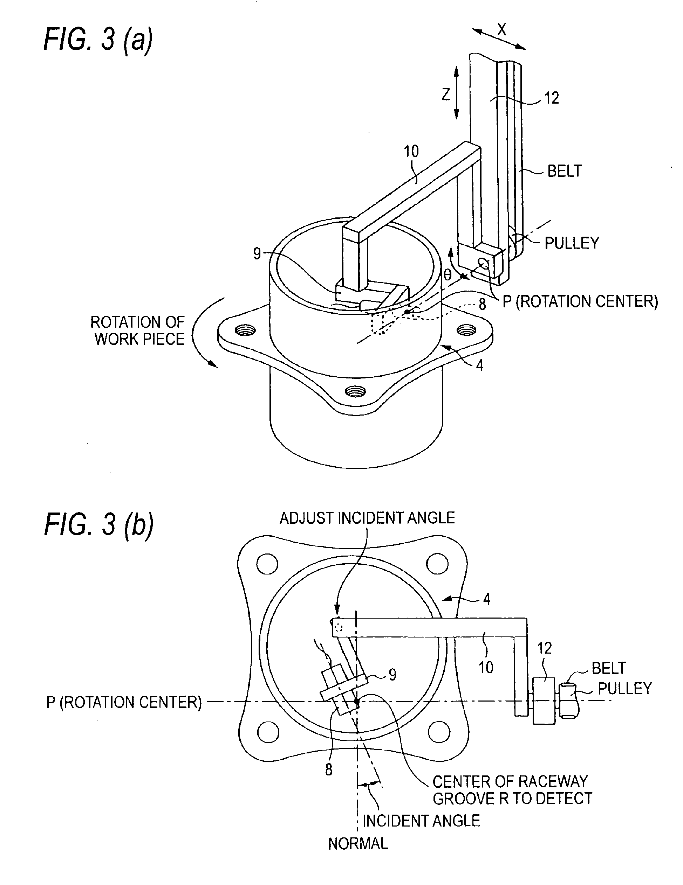

Fig. 1 is a general block diagram of an ultrasonic flaw detector according to an embodiment of the present invention, and Figs. 2 and 3 are fragmentary enlarged views.

In Fig. 1, reference numeral 1 designates a bath where is stored kerosene or another liquid hydrocarbon 2 serving as an ultrasonic wave transmission medium. In the present embodiment, kerosene is used as the liquid hydrocarbon 2, and a rust inhibitor is added to the kerosene. An outer ring 4 of a bearing and a jig 3 are positioned at lower locations within the bath 1. A fitting section 3a which enables fitting of the outer ring 4 of the bearing with its axis being oriented vertically is provided in an upper portion of the jig 3, and the jig 3 is rotationally driven by a motor 5 around an axis of rotation concentric to the axis of the bearing. The motor 5 is controlled by a controller 7 by way of a control amplifier 6 for driving a motor, and rotates the outer ring 4 set on the jig 3 at a given speed by means of driving action of the motor 5 for rotational driving purpose.

Here, the outer ring 4 is transported by means of an unillustrated transporting apparatus and fitted to the fitting section 3a of the jig 3 from above. Fig. 1 shows that the outer ring 4 is fitted to the jig 3. The depth of the liquid hydrocarbon 2 in the bath 1 is a depth at which the outer ring 4 is fully immersed in the liquid hydrocarbon 2 while the outer ring 4 remains fitted to the jig 3.

Reference numeral 8 designates a probe for ultrasonic flaw detection. In the present embodiment, a focal probe which exhibits high directivity and is less susceptible to the influence of a curvature radius of a raceway surface 4a is used. As mentioned previously, (a beam diameter "r"/the diameter of the transducer) is preferably set to 0.8 or less.

As shown in Fig. 2, the probe 8 is attached to anL-shaped probe fixture 9, and the probe fixture 9 is supported by way of a rotary mechanism and by a support section 12, which vertically extends by way of a C-shaped member 10 straddling the outer ring 4, so as to be rotatable about the vertical direction. The rotary mechanism is formed from a servo motor, a pulley, a belt, and the like; is controlled by the controller 7 by way of a control amplifier 11 for positioning purpose; and enables adjustment of a vertical inclination (direction θ) around a horizontally-extending rotary shaft P of the rotary mechanism.

The support section 12 supporting the probe 8 has an elevation mechanism formed from a direct-acting actuator; can be moved in the vertical direction (direction Z); and can be moved in a transverse direction (directions X and Y) by means of transverse mechanisms 13, 13' such as direct-acting actuators. The elevation mechanism 12 and the transverse mechanisms 13, 13' are controlled by the controller 7 by way of the positioning control amplifier 11, thereby adjusting the three-dimensional position of the probe 8.

The probe fixture 9 has a rotational adjustment mechanism within a plane perpendicular to the axis of the outer ring, and can be adjusted within the range of incident angle.

As mentioned above, the position of the probe 8 is adjusted by means of the elevation mechanism 12 and the transverse mechanisms 13, 13'. Further, the probe 8 can detect flaws while rotating along a curved surface of a groove R of a race in relation to the raceway surface 4a by means of the rotary mechanism.

Thus, the probe 8 is disposed opposite the raceway surface 4a of the outer ring 4 within the range of predetermined incident angle. In this state, the probe 8 transmits an ultrasonic pulse toward the raceway surface 4a of the outer ring 4 of the bearing in response to a voltage signal from an ultrasonic flaw detector 14; receives a reflected echo and converts the echo into a voltage signal; and transmits the voltage signal to the ultrasonic flaw detector 14.

In accordance with a command from the controller 7, the ultrasonic flaw detector 14 transmits a command signal formed from a voltage signal to the probe 8, and transmits to the controller 7 flaw information determined from the transmitted signal and the received signal. The controller 7 displays the flaw information on an unillustrated CRT (display) or the like.

In the ultrasonic flaw detector having the above configuration, the outer ring 4 of the bearing is fully immersed in the liquid hydrocarbon 2 serving as a medium, and the axis of the outer ring 4 of the bearing is preferably arranged vertically with respect to a liquid level. The outer ring 4 of the bearing is preferably treated with finish grinding. The angle of the probe fixture 9 is adjusted such that the incident angle of ultrasonic waves transmitted from the probe 8 (an angle inclined along the axis of rotation center of the probe 8 in the direction of a plane (a circumferential direction of the raceway surface 4a) perpendicular to the axis in relation to the normal to the raceway surface 4a) falls within a range of 15 to 30°. The probe 8 is lowered to perform adjustment in such a way that the axis of the probe 8 opposes the raceway surface 4a of the outer ring 4.

When the motor 5 is driven to rotate the outer ring 4 in this state and rotation of the outer ring 4 has become stable, the probe 8 detects flaws while being rotated in the axial direction of the bearing along the curved surface of the raceway surface 4a by way of the rotary mechanism (while being vertically oscillated). At this time, the center of the raceway groove R lies in the axis P of rotation center of the probe. Thus, the entire raceway surface 4 a of an obj ect of flaw detection is subjected to flaw detection.

For instance, a probe having, as a performance parameter, a frequency of 5 MHz and a transducer size of 6 mm is used as the focal probe 8.

In this configuration, the outer ring 4 is axially rotating around the center axis, and hence the raceway surface 4a opposing the probe 8 is moved in the circumferential direction while a distance between the raceway surface 4a and the probe 8 is maintained constant. Further, a position opposing the raceway surface 4a is changed vertically (the axial direction of the bearing) along the curved surface of the raceway surface 4a by means of vertically oscillating the probe 8. Thus, the entire raceway surface 4a is subjected to flaw detection; particularly, the bearing is axially (vertically) subjected to flaw detection along the curved surface of the raceway surface 4a.

Since the outer ring 4 is fully immersed in liquid at this time, dragging-in of air from the atmosphere, which would otherwise be caused when the outer ring 4 rotates, can be prevented.

The influence of disturbance inflicted on the liquid as a result of rotation of the outer ring 4 is reduced to a low level bymeans of holding the axis of the outer ring 4 vertical with respect to the liquid level.

There is a possibility of air bubbles adhering to the raceway surface 4a as a result of air having been dragged-in at the time of immersion of the outer ring 4 in a liquid. In light of this possibility, after immersion of the outer ring 4, the liquid hydrocarbon 2 may also be squirted onto the raceway surface 4a before performance of ultrasonic flaw detection or while ultrasonic flaw detection is being performed, thereby eliminating the air bubbles adhering to the outer ring 4. Since the air bubbles may also adhere to the raceway surface 4a even during rotation of the bearing, squirting the liquid hydrocarbon 2 at a position in front of the probe 8 during flaw detection is preferable. A squirting pressure is set to such a level which enables removal of the air bubbles adhering to the bearing ring or prevention of adhesion of the air bubbles.

Since there is a possibility of dust floating inside the medium stored in the bath, placing a filter, or the like, in the bath and circulating the medium filling the bath through the filter, to thus eliminate the dust and attempt to diminish noise, is preferable. It is preferable to blow a flow of the liquid on the dust adhering to the outer ring 4 serving as the workpiece, to thus blow off the dust, as in the case of air bubbles.

Since the normal of the fitting section 3a of the jig 3 that receives the bearing is set to an elevated position along the vertical direction, gravity and the axis of rotation are aligned to the same direction by means of merely fitting the outer ring 4 into the fitting section 3a from above. Further, by virtue of an effect of frictional resistance developing between the surface of the outer ring 4 and the surface of the fitting section 3a under the weight of the outer ring 4, the outer ring 4 can rotate at the same speed as does the jig 3 during rotation thereof without the outer ring 4 being fastened to the jig 3 by means of a chuck or the like. When compared with a case where the axis of the outer ring 4 is rotated while being horizontally placed on two separated rollers as described in JP-A-11-337530, the outer ring 4 can be rotated stably. The disuse of a constraining tool, such as a chuck, enables shortening of a cycle time, because of obviation of a time required to attach the chuck, as well as enabling attainment of a simplified structure. Moreover, the outer ring can be rotated much faster by means of addition of a grasping device, such as a chuck, to the jig 3, and a flaw detection time can also be shortened.

In the case of the outer ring 4 shown in Fig. 1, it has a double raceway. After completion of detection of flaws in an upper raceway surface 4a, rotation of the jig 3 is stopped, and the probe 8 is lifted and caused to recede. Subsequently, the outer ring 4 is raised and inverted by means of an unillustrated transporting apparatus, and the thus-inverted outer ring is again fitted to the jig 3. A raceway surface 4b not yet having been subjected to measurement is subjected to flaw detection in the same manner as mentioned previously. In the case of a single row of a bearing ring, such an inverting operation is not performed.

When results of flaw detection of both raceway surfaces 4a, 4b fall within specs, the outer ring 4 is placed in a non-defective product yard by means of the unillustrated transporting apparatus. In contrast, when the results fall outside the specs, the outer ring is placed in a holding area and later subjected to processing, such as remeasurement, scrapping, or the like.

In the above-described hub bearing outer ring 4, axial contour curves of the two raceway surfaces 4a, 4b are approximately symmetric about the vertical direction. After measurement of the raceway surface 4a, the outer ring is inverted, and the raceway surface 4b on the other side is measured. Thus, a tracking mechanism for the curves of the raceway surfaces 4a, 4b of the probe 8 can be embodied as a simple structure.

As a matter of course, so long as two probes 8 may be provided in accordance with the number of rows of bearing rings or a curve tracking mechanism capable of coping with both raceway surfaces 4a, 4b, flaws are detected without involvement of inversion of the outer ring 4, thereby further shortening the time to detect flaws. Moreover, so long as another stage is provided subsequent to inversion, and flaws are detected in another bath, a time to search flaws per stage can also be shortened.

Liquid hydrocarbon other than kerosene can also be used as a medium. Especially, the use of a hydrocarbon-based detergent also enables commonality of a liquid between a finish grinding process and an ultrasonic flaw detection process, as will be described.

Inspecting and eliminating flaws or non-metallic inclusions located on a raceway surface or at an area close to a raceway surface falling within a range where the raceway surface undergoes rolling stress are effective for achieving long life of a rolling bearing. Therefore, the present inventors have proposed a bearing ultrasonic flaw detection method for inspecting a target range by means of causing ultrasonic waves to enter a raceway surface at an angle, thereby refracting acoustic waves to the neighborhood of the surface. However, as results of subsequent studies; especially, a study about an object having the shape of a ball bearing with a small raceway diameter, there was found a problem of presence of areas which cannot be inspected practically with high accuracy because of reflection of echoes from both end portions of the raceway surface, in connection with the method for offsetting ultrasonic beams with reference to the normal (the method for detecting flaws while ultrasonic waves are being moved in the axial direction of a bearing) employed as the method for refracting acoustic waves to a neighborhood of a surface.

The offset method for inspecting the neighborhood of a surface has heretofore been known as a technique which enables detection of small flaws even in a workpiece having a small curvature. Consequently, it is impossible to easily estimate that the offset inspection method is inappropriate for the method for ultrasonically detecting flaws in a ball bearing that is an example object of the present invention and is similarly formed by machining a workpiece having a small curvature. However, as a result of the present inventors having conducted various tests about an incidence method, it is found that flaws can be detected at high sensitivity to a neighborhood of a groove piece without generation of substantial noise, which poses problems in the offset method, by means of adoption of a method for setting a probe at an incident angle rotating along a groove R with respect to the normal to the raceway surface of a workpiece. Further, in the case of a bearing where a raceway diameter of a workpiece to be inspected is 100 mm or less, an effect of adoption of this incident angle method is also found to be noticeably exhibited.

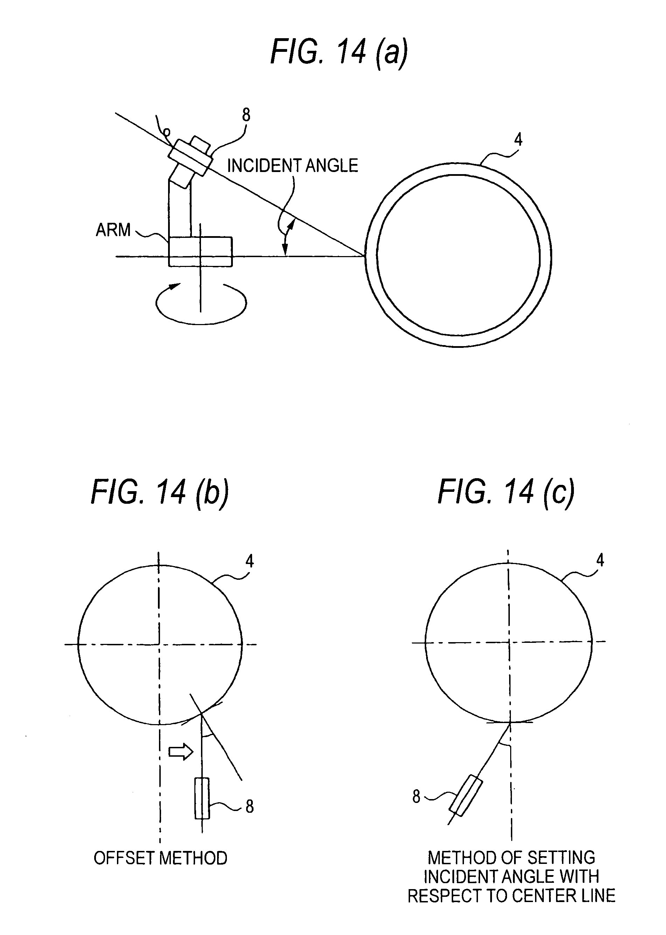

Fig. 14 shows the overview of the offset method and the overview of the incident angle method for causing ultrasonic waves to enter at an angle with respect to the center line. An inner ring is illustrated as a workpiece 4 in Fig. 14.

The offset method (see Fig. 14(b)) is a method for translating the probe 8 with respect to the center line, thereby setting an angle formed by a line tangential to a point of incidence of acoustic waves so as to fall within the range of the rolling stress exerted on the neighborhood of the surface (including, e.g., a surface, and extending to a position which is one mm or thereabouts beneath the surface). Meanwhile, the method for setting an angle of incidence with respect to the center line (see Fig. 14 (c)) is a method for causing ultrasonic waves to enter by means of inclining the probe 8 to the same angle as that adopted by the method with reference to the normal. Provided that the same distance between the probe 8 and the workpiece 4 is achieved in any of the methods, the same accuracy and sensitivity of flaw detection as in the past are generally achieved.

However, in the case of a ball bearing system which is an example applied with the present invention, verification of a comparison between the offset method and the incident angle method performed by the present inventors shows that echoes are reflected from the end portions of the groove under the offset method, which in turn poses difficulty in inspection of areas other than the neighborhood of a middle area. A result of verification of the incident angle method performed at the same angle of incidence shows that, when the probe is moved to the vicinity of end portions, the reflection of an echo from the groove is small and flaws can be detected with sufficiently-high sensitivity and accuracy.

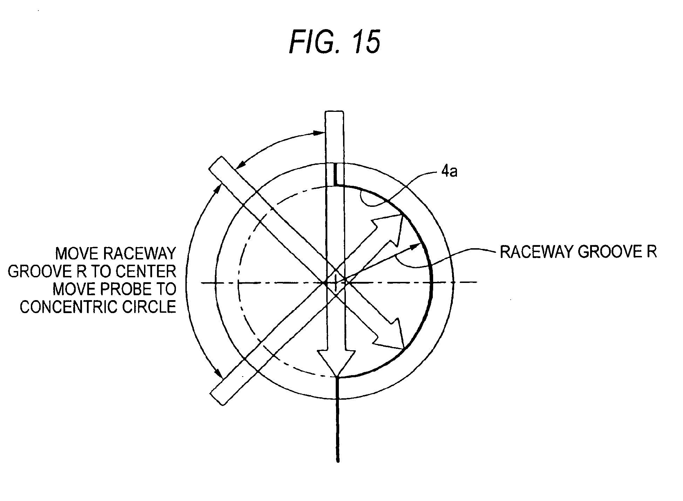

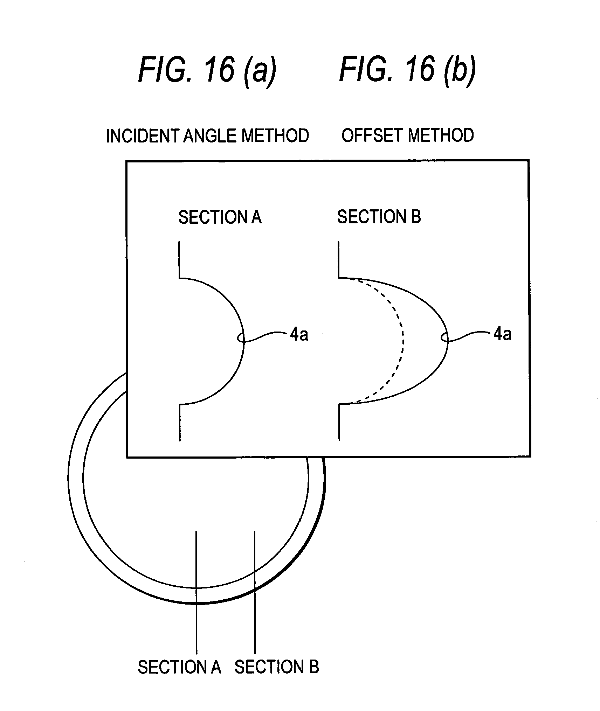

First, as shown in Fig. 15, the reason for this is estimated as follows. On the occasion when flaws in a bearing having the shape of a ball bearing are detected, in the case of the incident angle method a probe is moved to a circle concentric with the center of the groove R forming a raceway surface, in order to detect flaws in the entire raceway surface. As a result, as shown in Fig. 16(a), flaws in a circular raceway surface can be detected under the same conditions while the distance between the raceway surface and the probe is maintained constant at all times. In contrast, in the case of the offset method, when the probe is merely moved, while remaining offset, in the direction of a vertical axis as shown in Fig. 16(b), a distance between the probe and a point of incidence varies from the middle to both end portions of the groove (because an offset line assumes an oval shape as can be seen from an image of a cut end formed as a result of oblique cutting of bamboo and the distance becomes longer at the center of the groove).

Therefore, in order to perform accurate measurement under this offset method, there is a necessity for accurately presuming and measuring a locus by means of CAD, or the like, in agreement with this oval in such a way that a constant distance is achieved at the middle and both end portions, to thus set the movement of the probe. Particularly in the case of a bearing having a small raceway diameter, an error in the setting is noticeable, and hence performing highly-accurate inspection is considered to have become difficult.

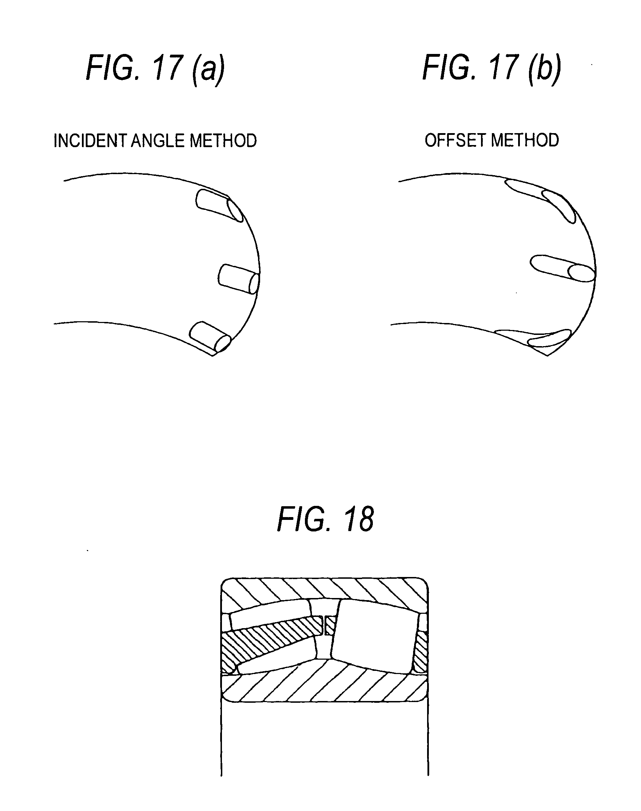

Even when accurate positional measurement can be performed, according to the incident angle method the probe moves along a circle concentric with the raceway groove R in relation to an incidence at any location regardless of the middle or both end portions. Therefore, a constant distance is achieved at all locations, and the shape of acoustic waves achieved at a point of incidence remains constant at all times. Under the offset method, the shape of acoustic waves becomes oval in the middle portion. However, the shape is understood to be distorted at both end portions, and sound is understood to spread in a nonuniform manner (see Fig. 17(b)). From the above, under the offset method, nonuniform acoustic waves are affected by the end portions of the raceway surface, to thus increase a base echo. Accordingly, it is considered to become impossible to detect flaws with high accuracy.

In the present embodiment, in order to render the incident method optimum, flaws are detected while the probe 8 is being rotated in the axial direction of the bearing along the curve of the raceway surface of the workpiece (the bearing ring). The center axis of rotation of the probe 8 is set so as to fulfill conditions (a) to (c) provided below, and the probe 8 is inclined in line with the center axis of rotation of the probe with reference to the normal to the raceway surface of the workpiece 4.
(a) The center axis of rotation of the probe passes through a point of center of the raceway groove to be subjected to flaw detection.
(b) The center axis of rotation of the probe is perpendicular to the normal to the raceway surface 4a to be subjected to flaw detection.
(c) The center axis of rotation of the probe lies in a plane perpendicular to the axis of the workpiece 4, such as a bearing ring which is an object of inspection.

Synthetic hydrocarbon, naphthene-based hydrocarbon, petroleum hydrocarbon, or the like, can be illustrated as the hydrocarbon-based detergent.

The above embodiment illustrates the incident method for detecting flaws while a probe is being rotated in the axial direction of the bearing along the curve of the raceway surface. When the workpiece is of predetermined diameter or more; e.g., 100 mm or more, there may also be adopted the offset method for detecting flaws while the probe is moved in the axial direction of the bearing along the raceway surface.

The above embodiment is an example where flaws are detected in the outer ring 4 of the hub bearing. However, by means of an essentially-identical method, flaws can be detected in an inner ring of a hub bearing having one raceway surface on an outer periphery side of the bearing by detecting flaws while the probe 8 is being moved along the raceway surface on the outer periphery side.

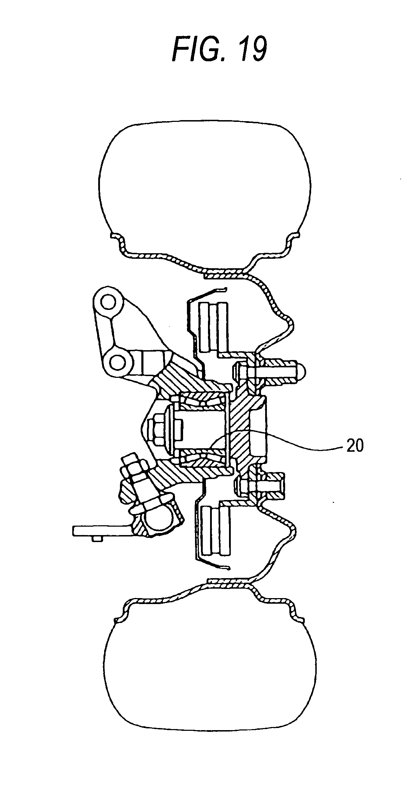

The above method can also be applied to a bearing ring of a single-row bearing, a bearing ring of a double-row bearing, or a bearing ring of another multi-row bearing other than the hub bearing. Flaws in a rolling-contact surface of a rolling element can also be detected in the same manner. For instance, the method can be applied to a self-aligning roller bearing such as that shown in Fig. 18 or detection of flaws in a tapered roller hub bearing 20 whose example use is shown in Fig. 19.

The ultrasonic flaw detector is not limited to the configuration mentioned above, and another ultrasonic flaw detector described in, e.g., JP-A- 11-337530 may also be adopted.

### Second Embodiment

A second embodiment will now be described by reference to the drawings. Elements analogous to those of the first embodiment will be described while being assigned the same reference numerals.

From the viewpoint of productivity, flaw detection is initiated as early as possible. Meanwhile, when time has elapsed very quickly since a workpiece was immersed, an effect for removal of air bubbles or dust becomes deficient, and pseudo noise attributable to air bubbles or the like frequently arises. Thus, there arise a request for productivity and a request for prevention of noise. An inspection method for minimizing noise through a round of operations for effecting an inspection by immersing a workpiece in a medium and immediately transporting the workpiece after conduction of a pass/fail test is desired as the ultrasonic inspection method for fulfilling the requests.

The present inventors have performed considerable studies about shortening of an inspection time and enhancement of inspection accuracy in relation to the round of operations.
(1) It is found that, under a method for inspecting a rolling raceway surface of a rolling bearing through ultrasonic flaw detection, air bubble noise responsible for the problem can be eliminated to an extent at which no problems arise, by means of setting to 1.5 sec. or more a time which elapses from immersion of a workpiece to be subjected to flaw detection into a medium until initiation of measurement.

(2) The method for ultrasonically inspecting flaws in a rolling raceway surface of a rolling bearing is realized as a method for previously immersing a workpiece to be subj ected to flaw detection in a medium at a location other than a measurement section, moving the workpiece to a flaw detection position in a medium after removal of air bubbles, and initiating measurement. As a result, it is found that an inspection can be started with air bubbles being removed at the time of initiation of measurement, which in turn enables preliminary removal of air bubbles without involvement of a hindrance to an inspection cycle entailed in the related art and performance of a high-resolution inspection with high reliability. These points are added to the present embodiment. An inner ring of a double-row ball bearing of hub I type is illustrated as the workpiece 4.

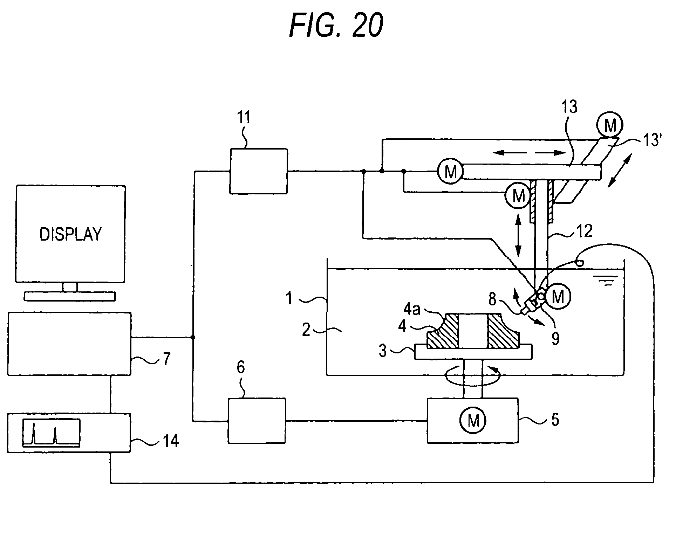

Fig. 20 shows the overview of an apparatus used in the present embodiment. In this apparatus, the workpiece 4 is transported to a flaw detection position in the medium 2 from an upper surface thereof and set on a turntable (the jig 3) by means of an unillustrated transporting apparatus. In relation to the thus-set workpiece 4, the turntable 3 rotates, and a flaw detection arm 9 supporting the probe 8 (the ultrasonic probe) approaches the workpiece 4. After the arm has been positioned at a predetermined location, the arm 9 is moved axially while maintaining a given distance along the curvature of the bearing raceway surface 4a. In association with rotation of the workpiece 4, flaws in the entire raceway surface 4a are detected. The basic general feature of the detector is the same as that of the detector described in connection with the first embodiment.

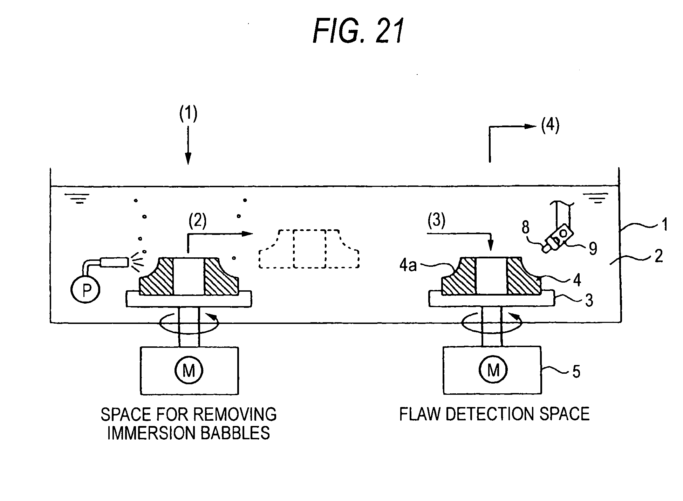

A lot of air bubbles are dragged-in when the workpiece 4 is immersed in the medium 2. However, the present inventors have searched a relationship between the time elapsing from immersion of a workpiece until initiation of flaw detection and detection of air bubble noise. As a result, the inventors have found that air bubble noise can be reduced to such an extent as not to affect a result of flaw detection by means of initiating flaw detection after elapse of 1.5 sec. or more since immersion of the workpiece. In order to exploit the finding, the workpiece 4 is immersed in a medium within a space for immersion and removal of air bubbles as shown in Fig. 21, and a liquid is blown to the workpiece, to thus eliminate bubbles, or the like, in advance during flaw detection of a preceding workpiece. In synchronism with removal of the preceding workpiece performed after completion of detection of flaws, the workpiece 4 from which bubbles, or the like, have been eliminated is moved to the flaw detection space, where flaw detection is performed (reference numerals (1) to (4) in Fig. 21 show the sequence of processes). Thus, flaw detection can be carried out at a short cycle.

In other respects, the detector is the same as that described in connection with the first embodiment in terms of a configuration and an advantage.

### First Example

The present example is directed toward performance of ultrasonic flaw inspection by use of: an ultrasonic flaw detector, such as that mentioned above, bymeans of incorporating an inspection process for ultrasonically detecting flaws subsequent to a finishing process in a bearing production process, and liquid hydrocarbon as a medium.

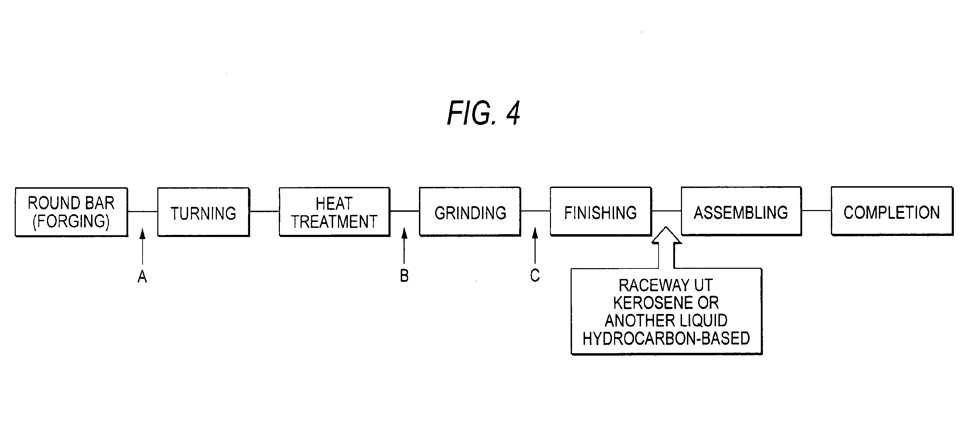

Fig. 4 shows example procedures of the process when ultrasonic flaw detection of the present embodiment is performed.

For comparison, Table 1 shows results of comparison among a conventional example 1 wherein ultrasonic flaw detection was performed after a round bar (a forging) process (see arrow A), a conventional example 2 wherein ultrasonic flaw detection was performed after heat treatment (see arrow B), a conventional example 3 where ultrasonic flaw detection is performed after grinding (see arrow C) while a water-based material is taken as a medium, and the first example of the present invention.

**[Table 1]**

| | Ultrasonic Inspection Process | Drawback: X |
|---|---|---|
| Conventional Example 1 | Material Stage | A raceway surface of a bearing is not inspected, and occurrence of a short-life product cannot be prevented. |
| Conventional Example 2 | After heat treatment | • Surface roughness is coarse, and sensitivity is insufficient. |
| | | • An inspection layer is taken later by means of grinding, or an area which requires inspection newly arises. |
| Conventional Example 3 | After grinding | • Much bubble noise arises for reasons of a deficiency in degassing. |
| | | • A degasifier is required, which adds to cost. |
| | | Specific effect: o |
| First Example | After superfinishing | • Surface roughness is superior, and sensitivity can be enhanced. |
| | | • Since a transmission medium is a kerosene-based medium, superior affinity is achieved, and the level of bubble noise is low. |
| | | • A decrease in sensitivity can be suppressed by use of an optimum flaw detection angle for a kerosene-based medium. |

As can be seen from Table 1, ultrasonic flaw detection is performed after superfinishing and the use of kerosene or another liquid hydrocarbon 2 as a ultrasonic wave transmission medium for the ultrasonic flaw detection are understood to be superior in terms of various points.

### Second Example

A second example will now be described by reference to the drawings.

Inner and outer rings 4 assigned call number 6206 were manufactured in order to evaluate the feasibility of detection of a flaw in a ball bearing typified by a hub bearing. After having undergone predetermined heat treatment and grinding, the inner and outer rings 4 were subjected to ultrasonic flaw detection.

As a comparative example, an inner ring assigned call number NU 311 for a cylindrical roller bearing was manufactured, wherein a rolling portion of a rolling element does not extend to edge portions thereof. After having undergone predetermined heat treatment, the inner ring was subjected to ultrasonic flaw detection after having undergone grinding.

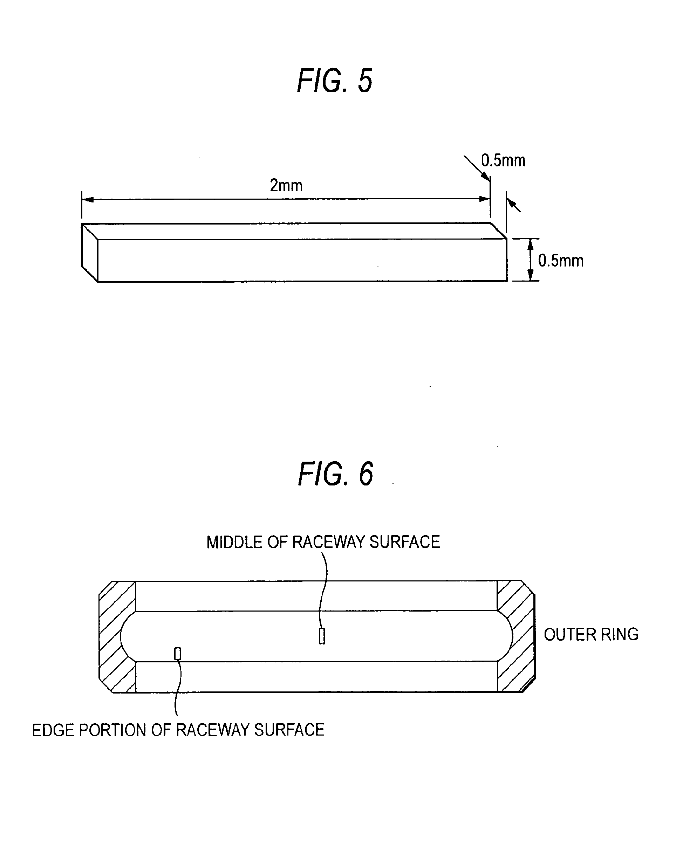

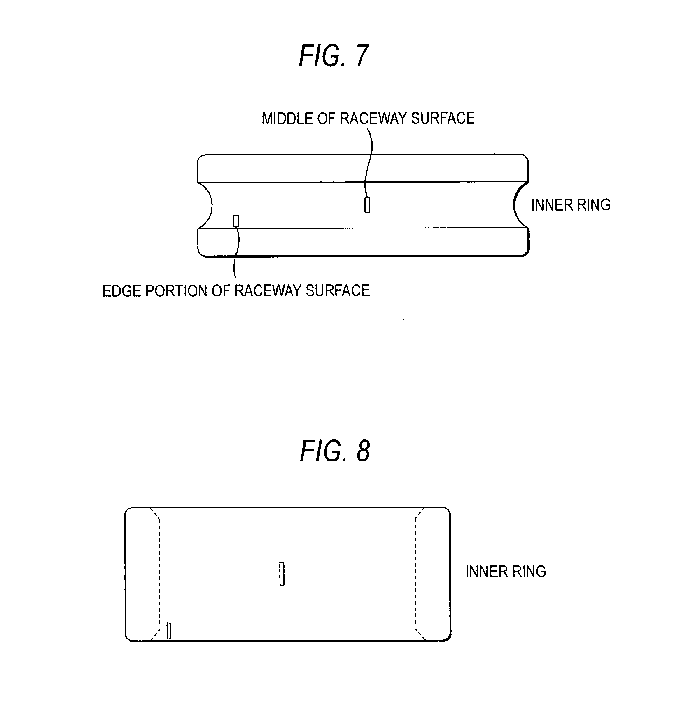

As shown in Fig. 5, a flaw to be detected was a surface flaw having a length of 2 mm, a depth of 0.5 mm, and a width of 0.5 mm. The surface flaw was formed at the middle position and edge portions of the raceway surface 4a bymeans of electrical discharge machining. The inner ring where the flaw was thus formed was used for inspection as a test piece. Figs. 6 to 8 show the general view of the test piece for inspection.

The ultrasonic flaw detector has a configuration as described in connection with the above embodiment.

Conditions for flaw detection were set as follows:

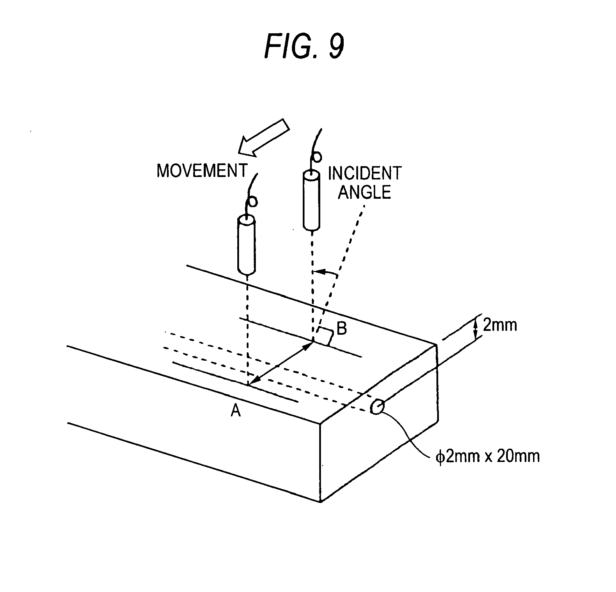

Probe 8: Focal probe, a flat probe (transducer diameter: 6.5 mm)
Frequency: 5 MHz
Incident angle: 17 to 25° (a refraction angle: 45 to 90°)
Medium: Kerosene (+ rust preventive oil)
Further, as shown in Fig. 9, a beam diameter was measured as follows: Namely, a transverse hole measuring Φ 2 mm × 20 mm was formed at a position 2 mm below the surface of a block test piece. Under conditions identical with those mentioned above, ultrasonic waves were caused to enter a direction parallel to the artificial flaw from the surface of the block test piece while the type of the probe 8 and a distance to a workpiece were changed in various manners. The probe was moved horizontally, and the intensity of echoes acquired at that time was recorded.

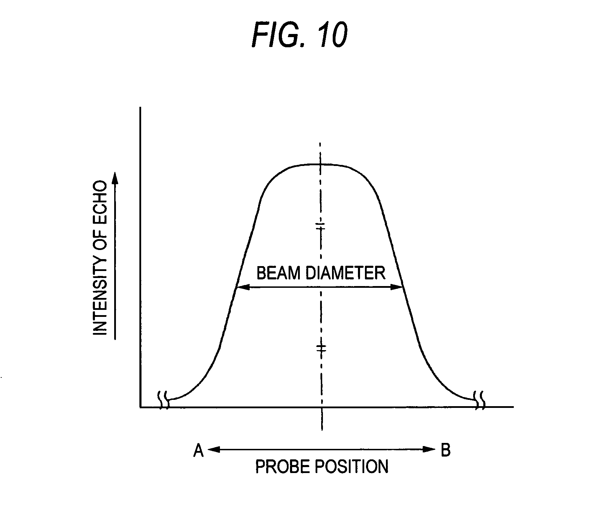

A widthwise distance acquired at a half position of a peak of the echo was defined as a beam diameter "r." This concept is illustrated in Fig. 10.

Artificial flaws (the flaw in the center portion and the flaw at the edge [only the flaw in the edge portion for NU311] in the bearing 6206, the inner and outer rings 4, and the inner ring NU311 shown in Figs. 6 through 8) were evaluated by means of changing to various values a ratio (r/R) between the beam diameter "r" determined by the above method and the diameter R of the transducer.

Changes in the ratio (r/R) between the beam diameter "r" and the diameter R of the transducer were examined through use of the focal probe whose focal length was changed to various values as a probe and by means of changing a water distance between the workpiece and the sensor.

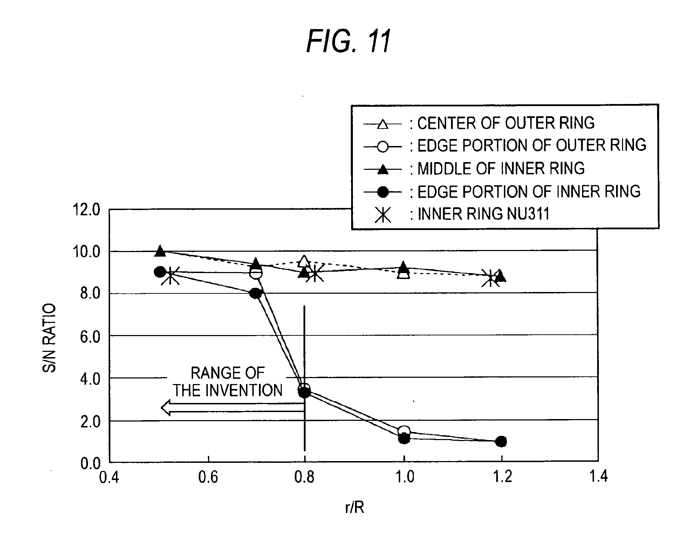

Results of the evaluation are shown in Fig. 11 and Table 2.

**[Table 2]**

| r/R | 6206 | | | | | | | | NU311 | |
|---|---|---|---|---|---|---|---|---|---|---|
| | Inner Ring | | | | Outer Ring | | | | Inner Ring | |
| | S/N | | | | S/N | | | | S/N | |
| | Edge Portion | | Middle | | Edge Portion | | Middle | | Edge Portion | |
| 0.5 | Example 1 | 9.0 | Example 4 | 10 | Example 7 | 9.0 | Example 10 | 10 | Example 13 | 8.8 |
| 0.7 | Example 2 | 8.0 | Example 5 | 9.4 | Example 8 | 9.0 | Example 11 | 9.3 | - | - |
| 0.8 | Example 3 | 3.3 | Example 6 | 9 | Example 9 | 3.5 | Example 12 | 9.5 | Example 14 | 8.9 |
| 1.0 | Comparative Example 1 | 1.2 | Comparative Example 3 | 9.2 | Comparative Example 5 | 1.5 | Comparative Example 7 | 9 | - | |
| 1.2 | Comparative Example 2 | 1.0 | Comparative Example 4 | 8.8 | Comparative Example 6 | 1.0 | Comparative Example 8 | 8.8 | Comparative Example 9 | 8.7 |

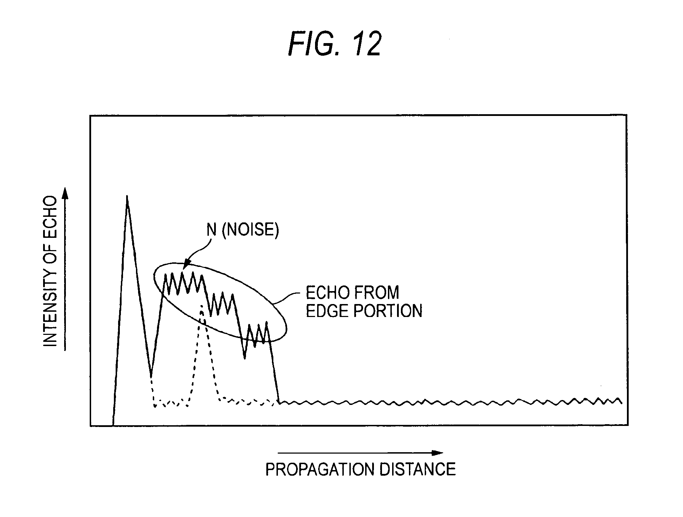

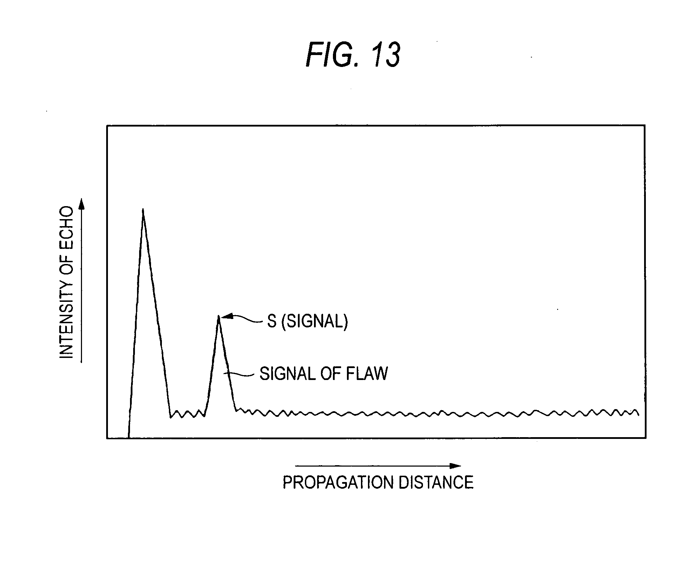

In relation to an evaluation standard, when an echo reflected from the edge portion becomes greater, an echo serving as a noise source becomes greater at a position in the vicinity of the surface as shown in Fig. 12. Even when a flaw is present in this portion (the vicinity of the surface), ascertainment of the flaw is hindered by noise and fails. Meanwhile, as shown in Fig. 13, the noise source disappears, and the flaw in the middle portion can be definitely ascertained. In relation to a method for evaluation whether or not the flaw can be ascertained, a ratio of the intensity of an echo (S: signal) from the flaw to the intensity of an echo (N: noise) from the edge portion is determined. An example assuming a value of three as an S/N ratio known as a ratio which can be ascertained generally by an inspection machine is determined to be non-defective and to serve for flaw detection.

The results shown in Table 2 and Fig. 11 show that, in relation to the flaw formed in the edge portions of the inner and outer rings of the bearing 6206, the noise source becomes high under influence of the echoes from the edge portions. For this reason, the S/N ratio assumes a value of less than three in comparative examples 1, 2, 5, and 6. In contrast, a result of study on S/N ratios of the noise from the edge portion and the flaw in the edge portion achieved by changing to various values the r/R in the relationship between the diameter R of the transducer and the beam diameter "r" shows that the S/N ratio assumes a value of three or more when r/R assumes a value of 0.8 or less. It is understood that the flaws in the edge portions, which have been difficult to detect in the conventional comparative example, can be inspected well (First to Sixth examples).

These problems are unique problems which are caused by echoes from the edge portions. A flaw formed in the middle of the raceway surface is understood to be detected well when the S/N ratio assumes a value of three or more, regardless of (r/R).

The inner ring NU311, where a flaw was likewise formed in the middle and edge portions (axial edge portions of the raceway surface over which rolling elements roll), was ascertained as a conventional example. However, in the bearing, a portion over which rolling elements roll is located somewhat distant from the edge portions. Hence, the flaw in the middle portion is understood to be unaffected by echoes from the edge portions.

From the above results, in a bearing such as a ball bearing involving the chance of rolling elements rolling over an area very close to the axial edge portions of the raceway surface, the entire raceway surface can be inspected with superior sensitivity by means of setting the relationship (r/R) of the diameter R of the transducer and the beam diameter "r" to a value of 0.8 or less. According to the present invention, the entire raceway surface 4a of a cylindrical roller bearing or a tapered roller bearing where a rib exists along an edge portion can be subjected to flaw detection, and a reliable bearing can be provided.

### Third Example

An example used for specifically explaining the present invention will be described hereunder.
In order to verify a difference in flaw detection capabilities attributable to a difference inmethods for causing ultrasonic waves to enter a ball bearing, the outer ring 6206 was manufactured and subj ected to predetermined heat treatment. After grinding of the outer ring, the outer ring was subjected to ultrasonic flaw detection.

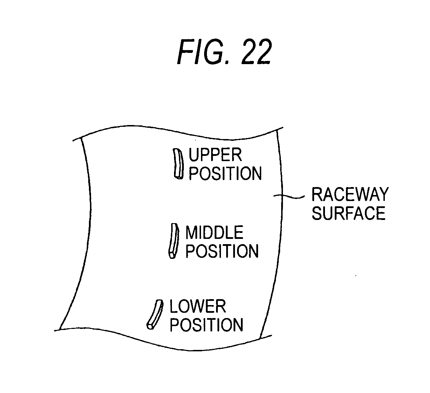

A flaw to be detected was a surface flaw having a length of 2mm, a depth of 0.5 mm, and a width of 0.5 mm. The surface flaw was formed at the center position and edge portions of the raceway surface by means of electrical discharge machining (see Fig. 22).
Ultrasonic flaw detection was embodied by the configuration shown in Fig. 1, and conditions for flaw detection were set as follows:
Probe: Focal probe, a flat probe (transducer diameter: 6.5 mm)
Frequency: 5 MHz
Incident angle: 17° to 25° (a refraction angle: 45° to 90°)
Medium: Kerosene (+ rust preventive oil)
Water distance: 20 mm
A workpiece to be inspected was set on a turntable, and the probe was arranged according to the offset method and the incident angle method while the table was turning, thereby axially moving the probe a pitch of 0.1 mm every turn of the workpiece along a raceway surface thereof to thereby detect flaws in the entire surface of the raceway surface. Base noise and the intensity of echoes reflected from the artificial flaws were evaluated.
Table 3 shows evaluation results.

**[Table 3]**

| | | Incident Angle | Upper Flaw | Middle Flaw | Lower Flaw |
|---|---|---|---|---|---|
| Comparative Example 1 | Offset method | 17° | -/60% | 85%/10% | -/65% |
| First Example | Incident angle method | 17° | 85%/5% or less | 80%/5% or less | 83%/5% or less |
| Comparative Example 2 | Offset method | 25° | -/80% | 80%/20% or less | -/70% |
| Second Example | Incident angle method | 25° | 90%/5% or less | 80%/5% or less | 93%/5% or less |

| | | | | | |
|---|---|---|---|---|---|
| an echo from a flaw / a base echo | | | | | |

As shown in Fig. 22, when flaw detection was performed according to the respective methods, sensitivity was adjusted such that the maximum value of an echo from the flaw in the middle assumes a value of 80%, in connection with detection of the artificial flaws formed in the upper, middle, and lower positions. Table 3 shows the intensity of the maximum echo from the upper flaw acquired at that sensitivity, the intensity of the maximum echo from the lower flaw acquired at that sensitivity, and base noise echoes acquired at those times. The base echo is an echo displayed at all times in an area other than the area of a flaw when the workpiece is rotated at the position where the flaw has been detected; and represents an echo acquired in a normal state.

As shown in the results of Table 3, according to the incident angle method, even when the incident angle falls within a range from 17° to 25° in connection with the artificial flaws formed in the upper, middle, and lower positions, the echo from the flaw assumes a value of 80% or more. Base noise achieved at that time also assumes a value of 5% or less, and a superior S/N ratio is acquired.

Meanwhile, according to the offset method, the flaw in the middle can be detected as a value of 80%. However, in relation to the flaws in the upper and lower positions, a base echo itself exceeded a value of 60%, and echoes from the flaws could not be ascertained. In order to ascertain a cause of an increase in the base echo, vinyl tape was pasted to neighborhoods of the edge portions of the raceway surface. No change in the base echo acquired in the middle position was found. However, the base echo was understood to exceed 100% in the upper and lower positions. As a result, the cause of an increase in base echo under to the offset method is assumed to be attributable to corners of the edge portions of the raceway surface having been detected as ultrasonic echoes.

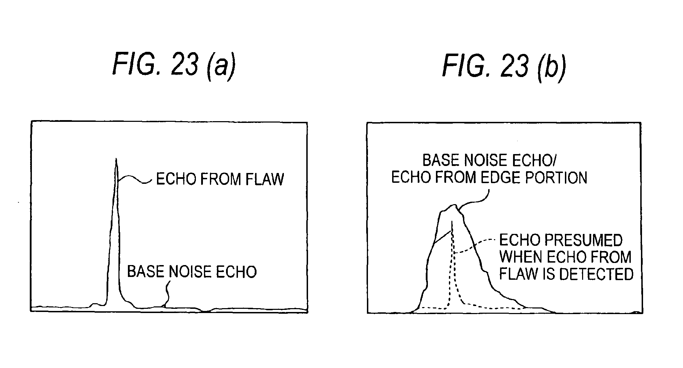

When the echo from the edge portion has become greater, there arises a failure to distinguish a flaw from an echo from an edge portion at the base noise level or less even when the flaw has been found in the vicinity of the edge portion. Therefore, a substantial range where flaw detection is feasible is understood to become narrower (see Fig. 23). Moreover, according to the offset method, when the flaw in the middle is calibrated at single sensitivity, it is understood that the flaw can be detected sufficiently. However, the base noise becomes greater than that acquired under the incident angle method. When an attempt is made to enhance detection capability, a limitation is understood to readily arise.

Therefore, even in the middle position, the incident angle method is understood to be superior in terms of detection capability. Fig. 17 shows an estimated factor model. However, under the offset method, a region where the density of acoustic waves is high is broadened to a wider range. Therefore, as compared with the incident angle method, in order to achieve the same sensitivity as that of the incident angle method, sensitivity must be increased. An eventual increase in base noise is assumed to be a factor.

### Fourth Example

In contrast with the incident method, an example for describing the size of a workpiece serving as a subject to be inspected is now provided.

Under the same conditions as those of the third example, a ring for which a raceway diameter of a bearing had been changed and which has an artificial flaw formed in an upper position thereof was manufactured. A relationship among the raceway diameter, detection capability, and base noise was studied.

Table 4 shows results of the study.

**[Table 4]**

| | Raceway Diameter | Offset Method | | Raceway Diameter | Incident Angle Method |
|---|---|---|---|---|---|
| Comparative Example 3 | 40 | 80% (an echo from an edge portion) | Example 3 | 40 | 5% or less |
| Comparative Example 4 | 60 | 80% (an echo from an edge portion) | Example 4 | 60 | 5% or less |
| Comparative Example 5 | 80 | 80% (an echo from an edge portion) | Example 5 | 80 | 5% or less |
| Comparative Example 6 | 100 | 60% | Example 6 | 100 | 5% or less |
| Comparative Example 7 | 120 | 25% | Example 7 | 120 | 5% or less |
| Comparative Example 8 | 140 | 15% | Example 8 | 140 | 5% or less |

The study shows base noises acquired when settings are made to sensitivity at which an echo from a flaw assumes a value of 80%.

From Table 4, according to the incident angle method, a sufficient S/N ratio is understood to be acquired (base noise of 5% or less) in response to an echo from a flaw even when the raceway diameter has changed from Φ40 to Φ140. In contrast, under the offset method adopted by the comparative examples, when the raceway diameter is Φ80 or less, an echo from the flaw is hidden by the base noise (an echo from an edge portion) cannot be ascertained. When the raceway diameter is Φ100 or less, flaw noise can be ascertained to 80%. However, base noise is as high as 60%, and distinction of the base noise from the noise from the flaw is understood to be difficult. As a matter of course, even under the offset method, when the raceway diameter is Φ100 or more, base noise assumes a value of 20% or less. In general, when an S/N is determined, a required S/N ratio assumes a value of three or more and is understood to be practicable.

Accordingly, a range where the incident angle method functions effectively (a range superior to that of the offset method) is understood to be a material diameter of Φ100 or less.

### Fifth Example

This is an example about the relationship between a time elapsing from immersion of a workpiece into a medium until initiation of flaw detection and detection of bubble noise.

A double-row ball bearing of hub I type having an inner ring diameter of Φ48 mm, an outer ring diameter of Φ86 mm, and a width of 40 mm was used for verification.

A detector shown in Fig. 20 was used.

The number of noise-induced signals generated was studied by means of changing the time that elapses from immersion of the inner ring in the medium by means of the transporting apparatus and arrangement of the inner ring on a flaw detection table until initiation of flaw detection. Results of the studies are provided.

Other conditions for inspection are described below.

In relation to a determination of an NG signal, a surface flaw measuring 2 mm in length, 0.5 mm in depth, and 0.5 mm in width was formed, by means of electric discharge machining, in a raceway surface of the inner ring of the workpiece to be inspected in this example, thereby creating a master.

Subsequently, this artificial flaw was set to sensitivity at which a signal assumes a value of 50% under the next conditions for flaw detection. Further, the sensitivity was doubled, and a flaw exhibiting a value of 50% or more at that sensitivity was determined to be NG.

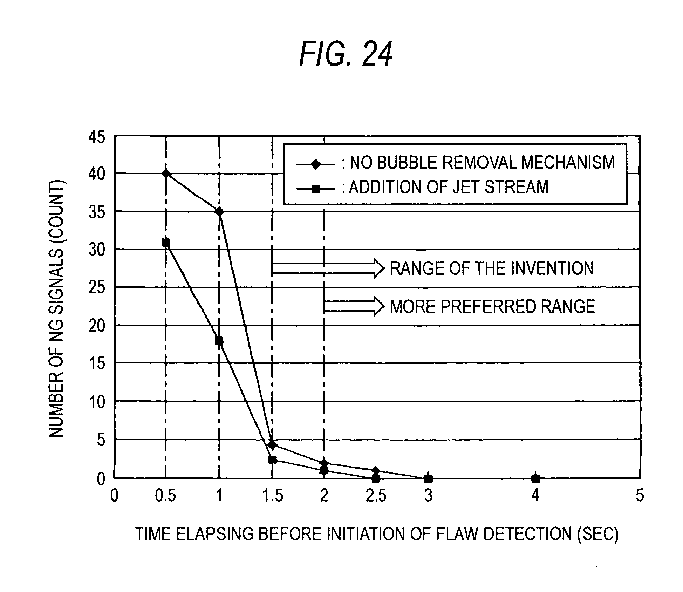

In addition to a probe, requirements for the facility are provided below.
Probe: Focal probe, a flat probe (transducer diameter: 6.5 mm)
Frequency: 5 MHz
Incident angle: 17° to 25° (refraction angle: 45° to 90°)
Medium: Kerosene (+ rust preventive oil)
Under the above conditions, flaw detection was performed at a pitch of 0.5 mm in the circumferential and axial directions, and the number of signals in excess of 50% was counted. Fig. 24 shows a result of counting.

From Fig. 24, on condition that the detector does not have a foam removal mechanism, the number of NG signals is large at an elapsed time less than 1.5 seconds. In contrast, the number of NG signals significantly decreases in excess of two seconds. Moreover, immediately after immersion of the workpiece, an attempt was made to remove dragged-in bubbles bymeans of additionof a jet stream to the surface of the workpiece to be inspected. Although a value superior to that achieved before addition of the jet stream was achieved, a lot of NG signals were present at an elapsed time less than 1.5 seconds. In connection with removal of bubble noise, elapse of time is understood to be more effective for a reduction in the number of NG signals than addition of a removal mechanism of any type. The reason for this is that bubbles are not induced by the oxygen or bubbles which have hitherto been present in the medium but by the bubbles which are dragged along with the workpiece during immersion thereof. In order to reduce the bubbles, a given period of time is required to remove bubbles after immersion of the workpiece. From the example, this time is understood to be 1.5 seconds or more. More preferably, the time is 2.0 seconds.

### Sixth Example

In relation to an inspection method in which production line tact is taken into consideration, an example of the present invention will be described. The fifth example relates to a method for removing bubbles before initiation of flaw detection by means of a flaw detection table. In this case, a time to remove bubbles is required in addition to the flaw detection time. Therefore, in order to diminish an inspection tact, the time to remove bubbles poses a problem.

To solve the problem, the present inventors have performed considerable study in order to achieve the minimum inspection time, and a result of the study is as follows. As shown in Fig. 21, an immersion bubble removal space intended for removing bubbles in advance is set in the vicinity of a flaw detection table. After a workpiece has been immersed at this position beforehand, a surface to be inspected is rotated or subjected to a jet stream for two seconds or more, thereby removing dragged-in bubbles. Subsequently, the workpiece is transported to a flaw detection table, while remaining immersed in kerosene, by means of an unillustrated arm and placed on the flaw detection table. Simultaneously with initiation of rotation of the table, flaw detection is commenced quickly. As a result, since use of the flaw detection table can be focused on flaw detection, a redundant inspection time is not required, which contributes to considerable shortening of an inspection time.

In relation to removal of bubbles, so long as consumption of a time is allowed, the same effect as that yielded by addition of a jet stream can be achieved through mere rotation. Moreover, since a raceway surface of, e.g., an outer ring or the like, has an inner diameter, a swirling stream can be generated by means of only a jet stream without involvement of rotation, whereby a removal effect is yielded.

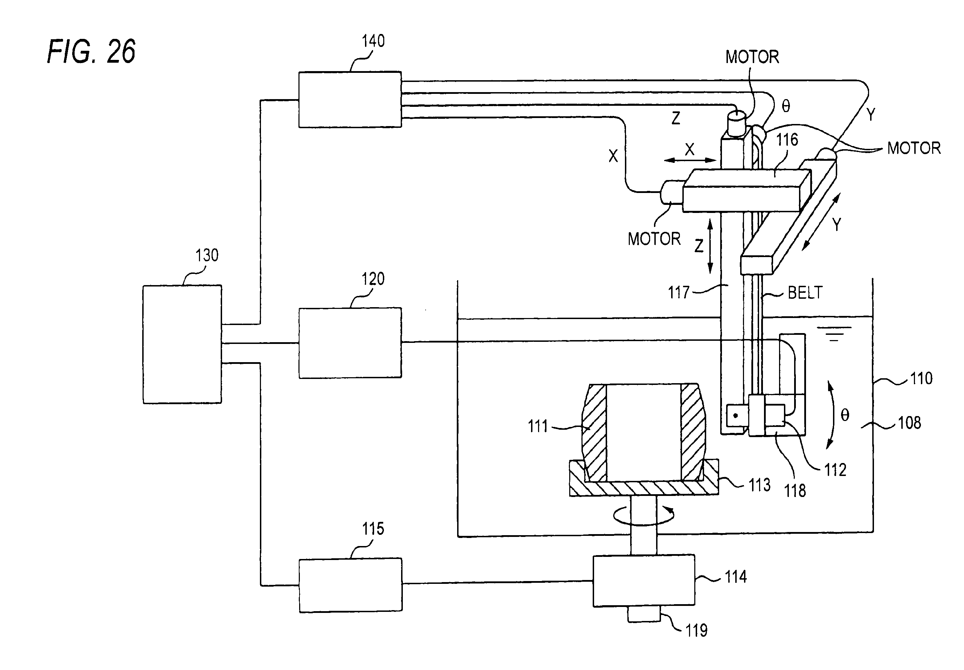

By reference to Figs. 26 to 33, there will be described in detail a flaw detection method for determining presence/absence of a flaw in accordance with a signal acquired by the ultrasonic flaw detection method embodied as mentioned previously.

### Third Embodiment

A best mode for implementing the present invention will be described hereunder by reference to the drawings.

First, a material made from SUJ2 having inferior cleanliness was machined into a predetermined shape. Thereafter, the thus-machined product was subjected to turning, quenching, tempering, and grinding, thereby producing an inner ring for a rolling bearing assigned call number NU322 (an outer diameter of 240 mm, an inner diameter of 110 mm, and a width of 50 mm).

The thus-produced inner ring was set in the ultrasonic flaw detector shown in Fig. 26, and a raceway surface of the inner ring was subjected to ultrasonic flaw detection under the conditions provided below.

As shown in Fig. 26, this ultrasonic flaw detector is designedto detect flaws in the entirety of the raceway surface of a subject to be inspected 111 by means of moving a probe 112 for ultrasonic flaw detection purpose in an axial direction (a metal-rolling direction, or direction Z in Fig. 26) of the subject 111 while the subject 111 immersed in a bath 110-where an ultrasonic wave transmission medium is stored-is being rotated in a circumferential direction.

When the raceway surface is a curve, flaw detection is performed while the probe 112 is rotated in the axial direction (the metal-rolling direction, or direction θ shown in Fig. 26) along the raceway surface, so that an interval and an angle between the raceway surface and the probe 112 can be maintained constant.

A reflected echo of an ultrasonic pulse transmitted from the probe 112 to the subject 111 is analyzed by means of an ultrasonic flaw detector 120. An echo signal reflected at each flaw detection pitch in the axial and circumferential directions of the subj ect 111 is synchronized with a pulse signal from a servo motor 114 which synchronously, rotationally drives the turntable 113 and the subject 111. As a result, the echo reflected at each flaw detection pitch in the axial and circumferential directions is measured, and the thus-measured echo is digitally displayed on a controller 130.

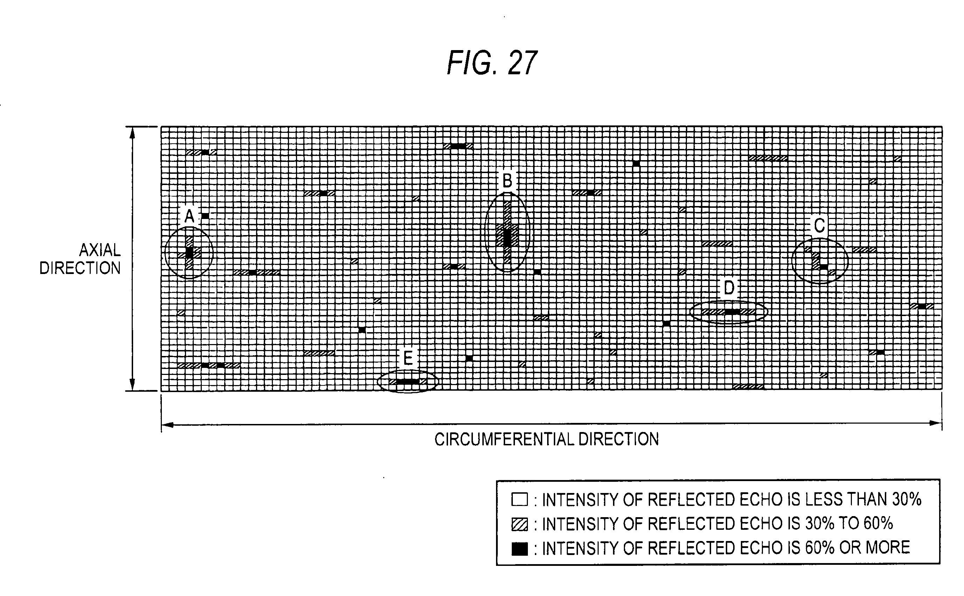

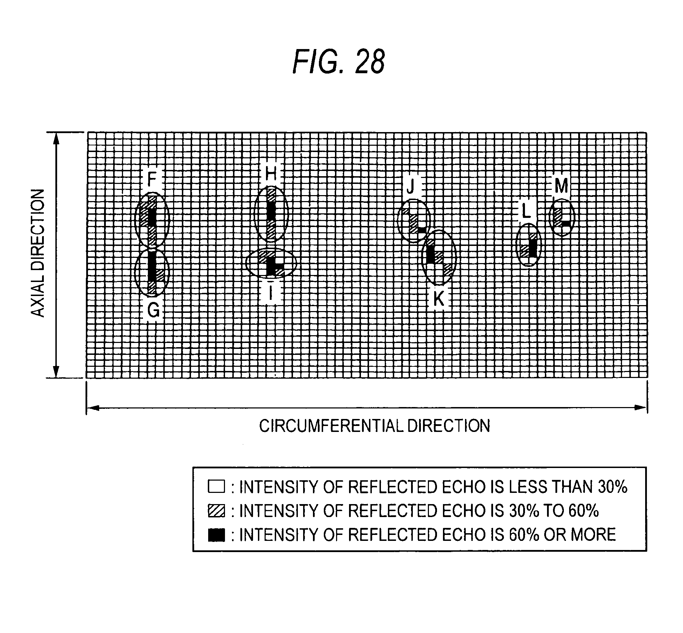

Reference numeral 115 in Fig. 26 designates a control amplifier for driving a servo motor. Likewise, reference numeral 116 designates an XYZ stage which adjusts the position of the probe 12 in the XYZ directions in the drawing, supports the probe 112 to be movable in the axial and circumferential directions of the subject 111, and moves the probe 112 along the raceway surface of the subject 111. Reference numeral 117 designates a support section for supporting the probe 112. Reference numeral 118 designates a fixture used for fixing the probe 112 to the support section 117. Reference numeral 119 designates a rotary encoder used for detecting a rotating state of the subject 111, and reference numeral 140 designates a control amplifier used for positioning the XYZ stage.
[Conditions for ultrasonic flaw detection]
Probe: a focal probe
Flaw detection frequency: 5 to 20 MHz
Transducer diameter: 6 mm
Ultrasonic flaw detector: HIS3 (manufactured by Krautkramer Japan Co., Ltd.)
Incident angle of 19° (Angle beam method, a refraction angle of 45°), 28° (Surface wave flaw detection method, a refraction angle of 90°)
Ultrasonic wave transmission medium: water (including dust protective agent)
Flaw detection gate: a position located 2 mm beneath the surface
Flaw detection pitch: a pitch of 0.5 mm in the circumferential direction of a subject to be inspected, and a pitch of 0.5 mm in the axial direction of the subject
Figs. 27 and 28 show results of ultrasonic detection of flaws in a different subject 111. Figs. 27 and 28 are views showing the intensity of an echo reflected at each flaw detection pitch within a range having a quarter width in the axial direction of the subject and a one-eighth width in the circumferential direction of the subject.

Next, as shown in Figs. 27 and 28, the subject 111 in which flaws A to M have been found is subjected to actual destructive inspection. A result of this destructive inspection is compared with a result of ultrasonic flaw inspection.

In Fig. 27, in connection with flaws A to C from which a reflected echo intensity of 30% or higher was continually measured over two or more pitches in the axial direction of the subject 111, inclusions which were to act as flaws were detected through actual destructive inspection. In connection with flaws D and E from which a reflected echo intensity of 30% or more was continually measured over two or more pitches in the circumferential direction of the subject 111, no flaws were found through actual destructive inspection.

From the above results, it is understood that a flaw can be detected with high accuracy by means of detecting, as a flaw, an area where reflected echoes of predetermined intensity or higher are continually present over a predetermined distance in the axial direction of the subject 111.

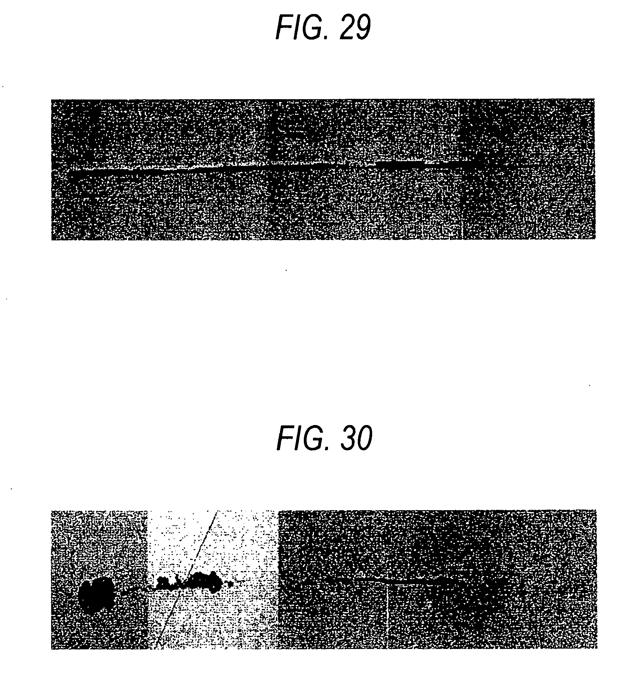

As shown in Fig. 29, flaws F and G which are adjacent to each other at a distance of one pitch in the axial direction of the subject 111 corresponded to a flaw formed from a single continual inclusion. Likewise, flaws J and K also corresponded to a flaw formed from a single continual inclusion.

As shown in Fig. 30, flaws H and I which are adjacent to each other at a distance of two pitches in the axial direction of the subject 111 corresponded to two flaws respectively formed fromdifferent inclusions. Likewise, flaws L and M corresponded to two flaws respectively formed from different inclusions.

From the above results show that, when two or more flaws are adjacently present within a range of a predetermined interval or less, the flaws are detected as a single continual flaw, so that the flaw can be detected with high accuracy.

### Fourth Embodiment

First, a material made from SUJ2 having inferior cleanliness was machined into a predetermined shape. Thereafter, the thus-machined product was subj ected to turning, quenching, tempering, and grinding, thereby producing an inner ring and an outer ring for a rolling bearing assigned call number 6202 (an outer diameter of 35 mm, an inner diameter of 15 mm, and a width of 11 mm).

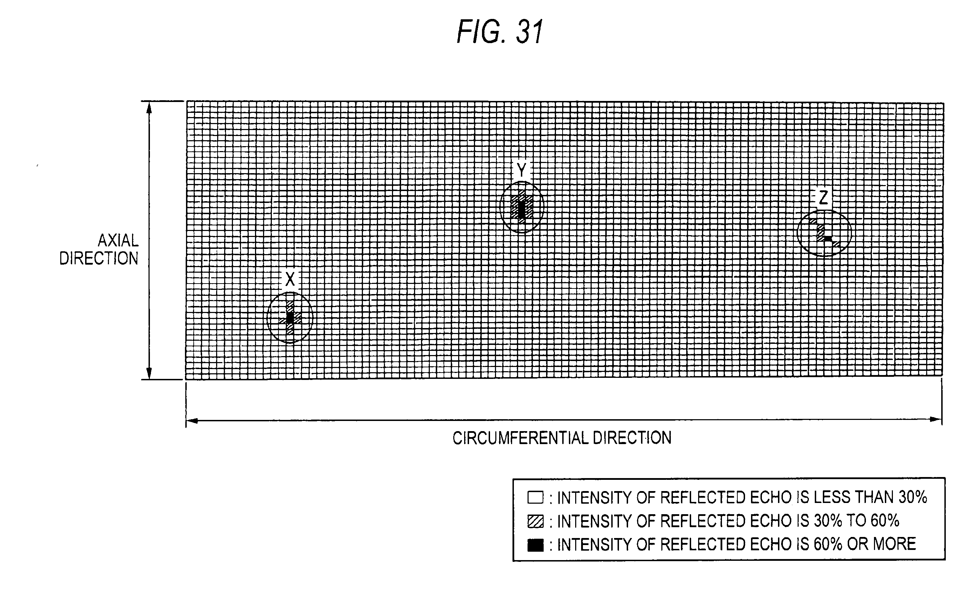

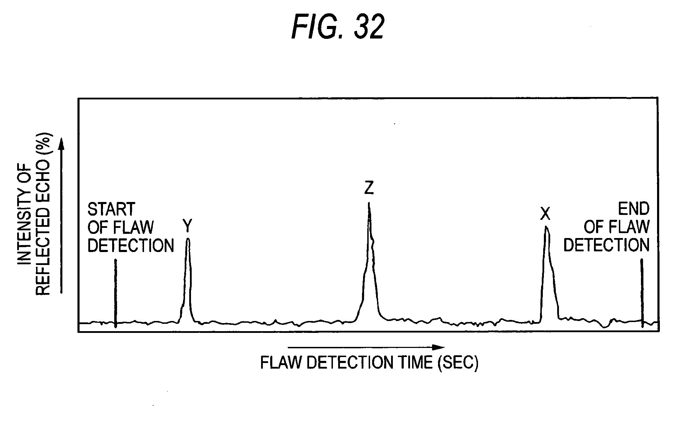

Next, the thus-produced inner and outer rings were set in the ultrasonic flaw detector shown in Fig. 26, and raceway surfaces of the inner and outer rings were subjected to ultrasonic flaw detection under the conditions provided below.
[Conditions for ultrasonic flaw detection]
Probe: a focal probe
Flaw detection frequency: 5 to 20 MHz
Transducer diameter: 6 mm
Ultrasonic flaw detector: HIS3 (manufactured by Krautkramer Japan Co., Ltd.)
Incident angle of 19° (Angle beam method, a refraction angle of 45°), 28° (Surface wave flaw detection method, a refraction angle of 90°)
Ultrasonic wave transmission medium: hydrocarbon-based cleaning fluid (kerosene and rust preventive agent)
Flaw detection gate: a position located 2 mm beneath the surface
Flaw detection pitch: a pitch of 0.5 mm in the circumferential direction of a subject to be inspected, and a pitch of 0.5 mm in the axial direction of the subject
Results of ultrasonic detection of flaws of a single subject 111 were recorded by both the method shown in Fig. 31 that constitutes the embodiment of the present invention and the method shown in Fig. 32 that constitutes the conventional method.

Fig. 31 is a view showing the intensity of an echo reflected at each flaw detection pitch through ultrasonic flaw detection within the entire range of the subject in the axial and circumferential directions thereof. When recording is performed as shown in Fig. 31, the position and length of the flaw included in the subject 111 can be determined at a glance.

Fig. 32 is a view showing a relationship between a flaw detection time and the intensity of a reflected echo within the entire range of the subject in the axial and circumferential directions thereof. When recording was performed as shown in Fig. 32, the position where a flaw had been detected was determined from a flaw detection time when a reflected echo of predetermined intensity or more had been acquired and a time over which rotation was performed in the circumferential direction of the subject 111. Hence, accurate determination of the location and length of the flaw included in the subject 111 was difficult, and a determination involved consumption of much time.

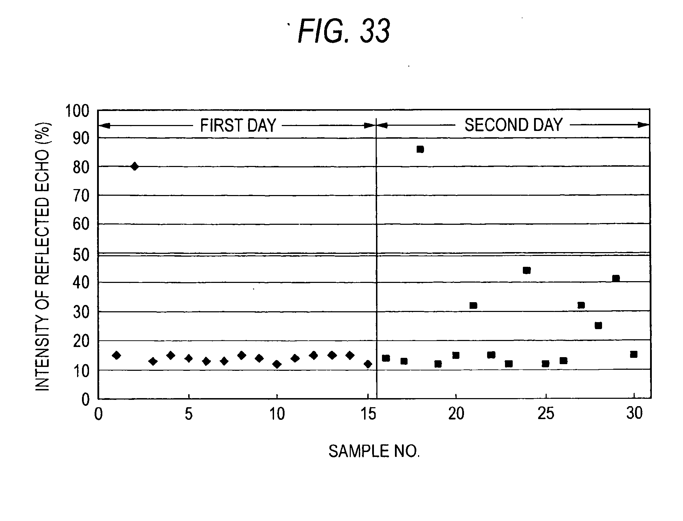

The maximum data pertaining to the reflected echo acquired by means of ultrasonic detection of flaws in the subject 111 were recorded as shown in Fig. 33. Fig. 33 shows recording of results of ultrasonic flaw detection performed for two days. A sample, for which maximum data pertaining to a reflected echo exhibits less than predetermined intensity (50%), is determined to be non-defective. A sample, for which maximum data pertaining to a reflected echo exhibits predetermined intensity (50%) or greater, is determined to be defective.

In relation to samples Nos. 2 and 18 determined to be defective, data pertaining to all of acquired echoes are recorded as shown in Fig. 31.

From the above results, in relation to the sample in which flaws have been detected, data pertaining to all of acquired echoes are recorded. In relation to samples in which flaws have not been detected, data pertaining to the maximum value of the acquired reflected echo are recorded. Thus, information about flaws which are present in the sample determined to be defective can be ascertained in detail. Further, pass/fail results of respective samples can be readily perceived, and it is understood that 100% inspection can be verified.

In relation to the sample determined to be non-defective, data pertaining to the maximum value of an acquired reflected echo are recorded. As a result, it is understood that the tendency of an individual production lot, such as mean data pertaining to maximum values of reflected echoes being greater in day two than in day one, or the like, can be readily ascertained.

It is obvious that flaws in a bearing ring can be detected by combination of the examples having been described thus far.

Although the present invention has been described in detail by reference to specific examples, it is manifest to those who are versed in the art to be able to make various alterations or corrections on the examples without departing from the spirit and scope of the present invention.

The present patent application is based on Japanese Patent Application (JP-2004-269552) filed on September 16, 2004, Japanese Patent Application (JP-2005-023487) filed on January 31, 2005, and Japanese Patent Application (JP-2005-131649) filed on April 28, 2005, the contents of which are hereby incorporated by reference.

## Claims

1. An ultrasonic flaw detection method for a rolling bearing, which inspects at least one of a raceway surface of a bearing ring and a rolling-contact surface of a rolling element as a surface to be inspected, the method comprising:
finish grinding the surface to be inspected; and
performing ultrasonic flaw detection by using liquid hydrocarbon including kerosene as an ultrasonic wave transmission medium.

2. The ultrasonic flaw detection method for the rolling bearing according to claim 1, wherein
(a beam diameter "r" / a diameter R of a transducer) is set to a value of 0.8 or less, and
flaw detection is performed while a probe is moved in an axial direction of the bearing along the surface to be inspected.

3. An ultrasonic flaw detection method for a rolling bearing, which inspects at least one of a raceway surface of a bearing ring and a rolling-contact surface of a rolling element, as a surface to be inspected, the method comprising:
setting (a beam diameter "r" / a diameter Rof a transducer) to a value of 0.8 or less; and
performing flaw detection while a probe is moved in an axial direction of the bearing along the surface to be inspected.

4. The ultrasonic flaw detection method for the rolling bearing according to any one of claims 1 through 3, wherein flaw detection is performed while the probe is being rotated in an axial direction of the bearing along a curve of the surface to be inspected.

5. An ultrasonic flaw detection method for a rolling bearing, which inspects at least one of a raceway surface of a bearing ring and a rolling-contact surface of a rolling element, as a surface to be inspected, the method comprising:
performing flaw detection while rotating a probe in an axial direction of the bearing along a curve of the surface to be inspected;
setting a center axis of the rotation of the probe so as to fulfill below conditions (a) to (c); and
inclining the probe along with the center axis of rotation of the probe with respect to a normal to the surface to be inspected:
(a) the center axis of the rotation of the probe passing through a point of center of the surface, in a widthwise direction thereof, to be inspected;
(b) the center axis of the rotation of the probe being perpendicular to the normal to the surface to be inspected;
(c) the center axis of the rotation of the probe lying in a plane perpendicular to an axis of the bearing ring or an axis of the rolling element which is to be inspected.

6. The ultrasonic flaw detection method for the rolling bearing according to claim 5, wherein the ultrasonic flaw detection is performed while kerosene or another liquid hydrocarbon is taken as an ultrasonic wave transmission medium after the surface to be inspected has finished undergone finish grinding.

7. The ultrasonic flaw detection method for the rolling bearing according to claim 5 or 6, wherein
(a beam diameter "r" / a diameter "R" of a transducer) is set to a value of 0.8 or less.

8. An ultrasonic flaw detection method for a bearing ring of a rolling bearing comprising:
immersing an entirety of the bearing ring into an ultrasonic wave transmission medium;
squirting the medium to the bearing ring; and
performing flaw detection such that an axis of the bearing ring becomes perpendicular to a liquid level of the medium.

9. An ultrasonic flaw detection method for a bearing ring of a rolling bearing comprising:
immersing an entirety of the bearing ring into an ultrasonic wave transmission medium;
setting a wait time of 1. 5 seconds or more before initiation of flaw detection; and
performing flaw detection such that an axis of the bearing ring becomes perpendicular to a liquid level of the medium.

10. The ultrasonic flaw detection method for the bearing ring of the rolling bearing according to claim 9, wherein
the bearing ring is previously immersed into the medium at a location other than a flaw detection position, and
the bearing ring is moved to the flaw detection position in the medium after removal of bubbles adhering to the bearing ring, and then flaw detection is performed.

11. A flaw detection method for applying ultrasonic waves to a subject of inspection and measuring an echo reflected from a flaw in the subject of inspection, to thus detect the flaw, wherein
an area where the reflected echo of predetermined intensity or more is successively measured over a predetermined distance in a metal-rolling direction of the subject of inspection is taken as the flaw; and,
when two or more flaws are present adjacently within a range of predetermined interval or less in the metal-rolling direction of the subject of inspection, the two or more flaws are detected as a single flaw.
